# EUROPEAN PATENT SPECIFICATION

(11) **EP 4 244 563 B1**
(45) Date of publication and mention of the grant of the patent: **04.09.2024**
(21) Application number: 21801423.1
(22) Date of filing: 02.11.2021
(51) Int. Cl.: F27D 19/00, F27D 21/00, F27D 27/00, F27B 3/08, F27B 3/10, F27B 3/28

(54) **CONTROL METHOD OF STIRRING DEVICE AND STIRRING DEVICE**
STEUERUNGSVERFAHREN FÜR EINE RÜHRVORRICHTUNG UND RÜHRVORRICHTUNG
PROCÉDÉ DE CONTRÔLE DU DISPOSITIF D'AGITATION ET DISPOSITIF D'AGITATION

(30) Priority: 11.11.2020 IT 202000026807
(43) Date of publication of application: 20.09.2023
(73) Proprietor: Ergolines Lab S.r.l., 34149 Trieste (IT)
(72) Inventor: Strolego, Sabrina, 34149 Trieste (TS) (IT); De Monte, Stefano, 34149 Trieste (TS) (IT); Persi, Cristiano, 34149 Trieste (TS) (IT); Spagnul, Stefano, 34149 Trieste (TS) (IT)
(74) Representative: D'Agostini, Giovanni
(86) International application number: PCT/EP2021/000138
(87) International publication number: WO 2022/117219

(56) References cited:
- WO-A1-2020/020478

## Description

### Technical field

The present invention relates to a control method of a stirring device and a stirring device for melting furnace.

### Prior art

In the field of the production of metal products, the use is known of recycled metallic materials which are melted in a melting furnace and are subsequently cast into molds or ingot molds in order to obtain workable metal elements for the production of finished or semi-finished products. The recycled metallic materials are introduced into the melting furnace in a solid state in the form of scrap or in the form of pellets and the supply of energy by the furnace allows the melting temperature to be reached of the recycled metallic materials, which progressively melt forming metal in the liquid state. During the melting and when the melting is reached, measurements of the metal in the liquid state are carried out in order to identify its chemical composition and subsequently introduce additives to correct the composition until the desired composition is reached. For example, the metal in the liquid state could be steel. Various types of melting furnaces are known, such as for example Electric Arc Furnaces, known as EAF, induction furnaces, burner furnaces, furnaces for melting and maintaining of non-ferrous alloys such as aluminum and its alloys, magnesium and copper alloys.

The use of electromagnetic stirring devices for furnaces is also known, known as stirrers, which, by means of the generation of electromagnetic fields, induce a movement of the metal in the liquid state, favoring a more rapid melting of the recycled metallic materials, increasing the electrical efficiency as a result of a better transmission of energy from the electrodes to the metal in the liquid state in the case of EAF furnaces, improving the homogenization of the metal in the liquid state contained in the furnace and thus obtaining improved productivity.

The melting furnace is made of steel and, to contain the metal in the melted state, the melting furnace is internally provided with a containment area, which is covered on the bottom and on the walls with refractory material capable of resisting for long periods, both high temperatures of the metal in the melted state and thermal stresses, such as, for example, the thermal stresses generated as a result of the electric discharge of the electric arc in a furnace of EAF type.

Patent application WO 2020/020478 describes a system and method for detecting a melting condition of metallic materials inside a furnace and further a system and method for detecting a melting condition of metallic materials and electromagnetic stirring in which a detection of a melting condition of metallic materials is carried out within a melting furnace, by means of a series of coils arranged on a deposition surface with formation of at least one measurement zone, with calculation of electrical conductivity or resistivity values of the metallic materials and determination of the melting condition of the metallic materials inside the furnace with possible command of an electromagnetic stirrer.

### Problems of prior art

The refractory material for the coating of the containment area of the metal in the melted state, despite being resistant to temperatures and thermal stresses, is progressively consumed both by erosion due to the presence of the metal in the melted state, and by erosion due to the presence of slag which chemically attack the refractory material.

Following the erosion of the refractory material placed on the bottom of the melting furnace, the metal in the melted state contained in the furnace is placed in a lower position than the position in which it is when the refractory material is in the initial unworn state. Consequently, if on the melting furnace there is an electromagnetic stirring device or stirrer installed below the furnace itself, the stirring action induced by the electromagnetic stirring device or stirrer increases due to the reduction of the distance, due to the fact that the metal in the melted state is in an area where the electromagnetic stirring field generated is more intense.

As a consequence of this fact, higher stirring speeds of the metal in the melted state are obtained for the same stirring power transmitted to the electromagnetic stirring device or stirrer. The effect of the uncontrolled increase in the stirring speed of the metal in the melted state is an increase in the rate of erosion of the refractory material of the bottom of the melting furnace, thus accelerating the wear of the refractory material and further increasing the phenomenon, leading to an early wear of the refractories than expected.

### Aim of the invention

Aim of the present invention is to provide a system and method for controlling a stirring device for a melting furnace, in which the stirring power induced by the stirring device on the metal in the melted state contained in the furnace is controlled, in order to obtain a speed controlled following the stirring induced on the metal in the melted state contained.

### Concept of the invention

The scope of the present invention is defined by independent claims 1 and 7, and further embodiments of the invention are specified in dependent claims 2-6 and 8-23.

### Advantageous effects of the invention

The solution according to the present invention, through the considerable creative contribution the effect of which constitutes an immediate and not negligible technical progress, has various advantages.

By means of the control system and method of a stirring device according to the present invention, it is possible to maintain induced stirring speeds of the metal in the melted state contained in the furnace which are more constant, with the consequence of obtaining greater uniformity of stirring in the different castings and a qualitative improvement of the final product, that is steel, as the casting process is more controlled.

Furthermore, there is less wear of the refractory material of the melting furnace, with consequent lengthening of the times of use of the furnace before stopping the production for the maintenance of the refractories, this being a considerable benefit from the economic point of view, as it increases the production efficiency.

Furthermore, a direct energy saving is also obtained due to the fact that the power used by the stirring device can be regulated, in order to obtain the desired stirring speed with a reduction in energy consumption when, following the wear of the refractory material, the effect induced by the generated electromagnetic field increases, allowing a decrease in the power required with the same effect obtained on the metal in the melted state.

### Description of the drawings

An embodiment solution is described hereinafter with reference to the attached drawings to be considered as a non-limiting example of the present invention in which:
Fig. 1 is a side schematic view showing the positioning of a stirring device on a furnace and its effect on the metal in the melted state in the furnace.
Fig. 2 schematically represents the trend of the electromagnetic field generated by the stirring device within the furnace, depending on the distance from the stirring device.
Fig. 3 schematically shows the progressive erosion of the internal bottom of the furnace as a result of wear with the use of the furnace itself.
Fig. 4 is a graph showing the percentage increase in the speed induced by the stirring device on the metal in the melted state inside the furnace, depending on the erosion of the internal bottom of the furnace expressed in millimeters in condition of constant driving current of the stirring device.
Fig. 5 is a block diagram schematically showing the inventive system.
Fig. 6 is a graph showing the percentage reduction of the driving current of the stirring device which is obtained by setting a constant stirring speed of the metal in the melted state within the furnace depending on the erosion of the internal bottom of the furnace expressed in millimeters.
Fig. 7 is a graph illustrating the percentage reduction of the driving energy consumption of the stirring device, which is obtained by setting a constant stirring speed of the metal in the melted state within the furnace, depending on the erosion of the internal bottom of the furnace expressed in millimeters.
Fig. 8 is a schematic sectional representation of a first possible embodiment of one of the components of the inventive system for detecting the state of the refractory of the furnace.
Fig. 9 is a schematic sectional representation of a second possible embodiment of one of the components of the inventive system for detecting the state of the refractory of the furnace.
Fig. 10 represents a plan view of a possible stirring device which can be used within the scope of the present invention.
Fig. 11 represents a view showing a possible arrangement of the stirring device of Fig. 10 on a furnace.
Fig. 12 represents a view showing the effect of the stirring device of Fig. 11 on the bath of metallic materials in the melted state within the furnace in a mode of operation of linear type.
Fig. 13 represents a view showing the effect of the stirring device of Fig. 11 on the bath of metallic materials in the melted state within the furnace in an exemplary operating mode of rotary type.
Fig. 14 represents a view of one of the elements of the inventive stirring device.
Fig. 15 represents a plan view of a different embodiment of the stirring device according to the present invention.
Fig. 16 represents a plan view of a different embodiment of the stirring device according to the present invention.
Fig. 17 represents a side schematic view showing a possible further embodiment of the inventive solution.

### Description of the invention

The present invention relates to a control system and method of a stirring device for steel for a melting furnace for enabling control of the stirring speed of the metal in the melted state within the furnace.

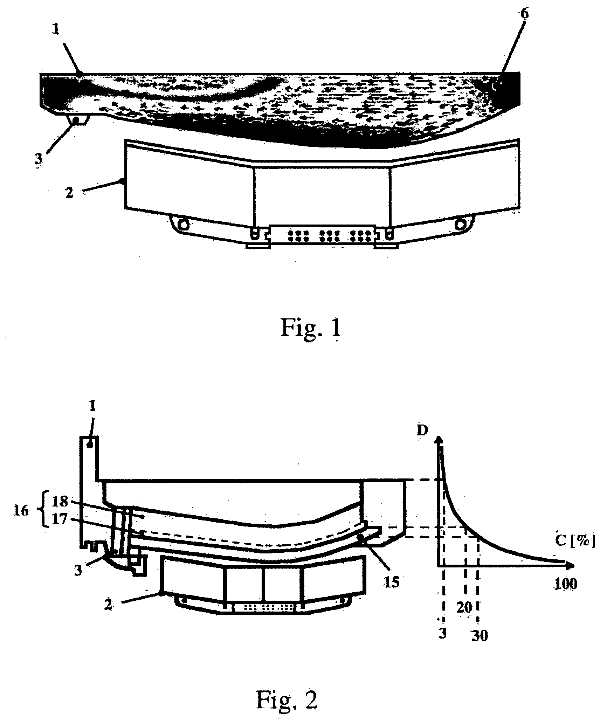

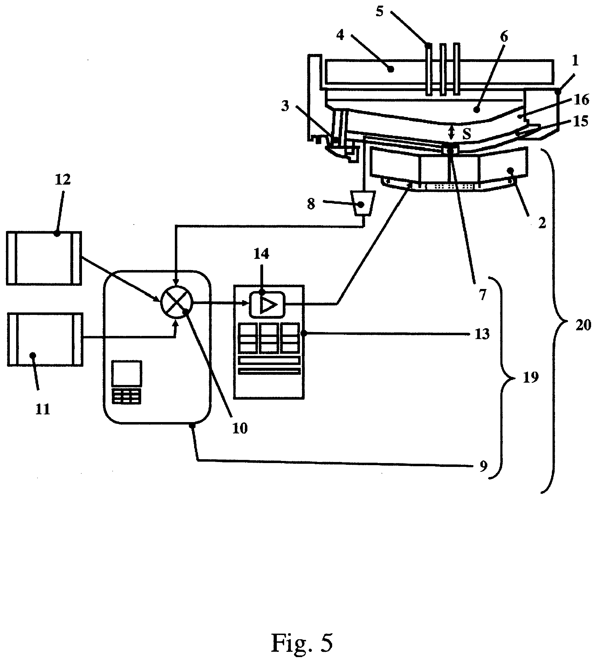

In the field of the production of metal products, recycled metallic materials or other metallic material are melted (Fig. 1) in a melting furnace (1) and are subsequently cast into molds or ingot molds, in order to obtain workable metal elements for the production of finished or semi-finished products. The recycled metallic materials are introduced into the melting furnace (1) in a solid state in the form of scrap or in the form of pellets and the supply of energy by the furnace (1) allows the melting temperature to be reached of the recycled metallic materials, which progressively melt forming metallic material in the melted state (6) inside the furnace. For example, the furnace (1) can be (Fig. 5) an EAF electric arc melting furnace (1), in which a series of electrodes (5) mounted on a cover (4) of the furnace transfer energy to the metallic materials contained in the furnace by means of electric discharges until a bath of metallic material in the melted state (6) is obtained. During the melting and when the melting is reached, measurements of the metallic material in the melted state (6) are carried out, in order to identify its chemical composition and subsequently introduce additives to correct the composition until the desired composition is reached. For example, the metal in the liquid state could be steel. The present invention can be applied to different types of melting furnaces such as for example Electric Arc Furnaces, known as EAF, induction furnaces, burner furnaces, furnaces for melting and maintaining of non-ferrous alloys such as aluminum and its alloys, magnesium and copper alloys. Although in the figures reference is made to a furnace of the EAF type, it will be evident to an expert in the field that this representation is for illustrative and non-limiting purposes and that the present invention is also applicable to the other types of furnace indicated which are to be all considered as included by definition in the indication of "furnace (1)" unless otherwise specified.

In order to render the chemical composition uniform of the metallic material in the melted state (6) and to render the temperature uniform of the bath of metallic material in the melted state (6), avoiding the formation of cold spots and also favoring the melting of metallic materials still in the solid state, electromagnetic stirring devices (2) are used, which are mounted below the furnace (1), near a bottom wall (15) of the furnace (1). The electromagnetic stirring device (2) or stirrer, by generating electromagnetic fields, induces a movement of the metallic material in the melted state (6), favoring a more rapid melting of the recycled metallic materials, increasing the electrical efficiency as a result of a better energy transmission from the electrodes to the metal in the liquid state in the case of EAF furnaces, improving the homogenization of the metal in the liquid state contained in the furnace and thus obtaining improved productivity.

The melting furnace is made of steel and, in order to contain the metal in the melted state, the melting furnace is internally provided with a containment area, which is covered, on the bottom wall (15) and on the side walls, with refractory material (16) capable of resisting for long periods both the high temperatures of the metallic material in the melted state (6), and thermal stresses, such as, for example, the thermal stresses generated as a result of the electric discharge of the electric arc in an EAF type furnace. In general, the refractory material (16) comprises a first internal layer (17) made of bricks, in which the first layer (17) is applied to the bottom wall (15) of the furnace, made of steel according to a configuration in which the first layer (17) is enclosed between a second outer layer (18) and the metallic bottom wall (15) of the furnace. The first inner layer (17) constitutes a safety layer and can, for example, consist of magnesite bricks. The first layer (17) is designed to resist for a long time, approximately between six months and a year. The second layer (18) of refractory material is then applied to the first layer (17). The second layer (18) is the layer which in normal conditions is in contact with the metallic material in the melted state (6) and constitutes the actual wear layer. For example, the second layer can be made of bricks or as a single monolithic layer obtained by applying refractory material in paste or powder, which is compacted and sintered to form a compact and uniform monolithic protection to form the wear refractory layer.

In the figures (Fig. 2, Fig. 3, Fig. 5) the representation of the layers comprising bottom wall (15) of the furnace (1), first layer (17) of refractory material, second layer (18) of refractory material is made not to scale for illustrative purposes, intending that the bottom wall (15) of the furnace has a much smaller thickness than the thickness of the first layer (17) of refractory material and second layer (18) of refractory material, as specified hereinafter in more detail.

The thickness of the metallic bottom wall (15) of the furnace (1) can be, for example, of the order of 30-60 mm. The thickness of the refractory material (16) can be, for example, of the order of 480-700 mm for an alternating current EAF-type furnace or of the order of 748-948 mm for a direct current EAF-type furnace.

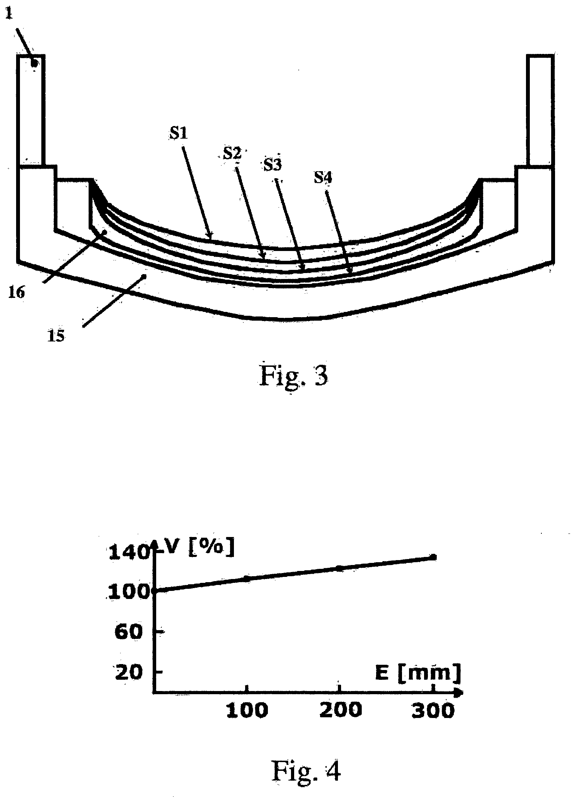

The refractory material (16) covering the containment area of the metallic material in the melted state (6), despite being resistant to temperatures and thermal stresses, is progressively consumed (Fig. 3), both by erosion due to the presence of the metal in the melted state, and by erosion due to the presence of slag which chemically attacks the refractory material. Consequently, from an initial thickness (S1) of refractory material, as a result of its wear, there is an initial reduction in thickness (S2) which subsequently continues with a further reduction in thickness (S3) until a final thickness is reached (S4) which is a critical thickness, as an excessively thin refractory thickness can lead to penetration of the metallic material in the melted state (6) with damage to the bottom wall (15) of the furnace (1), in addition to the risk of a contact between metallic material in the melted state (6) and water cooling circuits with generation of explosive phenomena. Consequently, it is necessary to keep the thickness of the refractory material (16) under observation, in order to plan its maintenance or replacement.

There is a problem relating to the fact that, following the erosion of the refractory material (16) placed on the bottom wall (15) of the melting furnace (1), the metallic material in the melted state (6) contained in the furnace is placed in a lower position than the position in which it is when the refractory material (16) is in the initial unworn state. Consequently, the electromagnetic stirring device (2) or stirrer installed below the furnace (1) itself induces a greater electromagnetic stirring action due to the reduction of the distance, due to the fact that the metal in the melted state (6) is in a zone in which the generated electromagnetic stirring field is more intense (Fig. 2). Indeed (Fig. 2), observing the trend of the electromagnetic field generated by the electromagnetic stirring device (2) or stirrer, it can be seen that the electromagnetic field increases exponentially as the distance decreases from the electromagnetic stirring device (2) or stirrer, while it decreases as the distance increases from the electromagnetic stirring device (2) or stirrer.

As a consequence of this fact, higher stirring speeds of the metallic material in the melted state (6) are obtained for the same stirring power transmitted to the electromagnetic stirring device (2) or stirrer. Under these conditions, if no adjustment is made on the value of the supply current of the electromagnetic stirring device (2) or stirrer, the speed induced by the electromagnetic stirring device (2) or stirrer on the metallic material in the melted state (6) will increase due to the smaller distance between the metallic material in the melted state (6) and the electromagnetic stirring device (2) or stirrer. For example (Fig. 4), representing the percentage increase of the speed induced by the electromagnetic stirring device (2) or stirrer on the metallic material in the melted state (6) within the furnace (1), depending on the erosion of the refractory material (16) expressed in millimeters in condition of constant driving current of the electromagnetic stirring device (2), there is an evident increase in speed which, for example, for a reduction in thickness of the refractory material (16) by 300 mm, can also be of the order of 140% with respect to the expected speed conditions, by definition corresponding to the value of 100%. The greater the wear of the refractory material (16), the smaller its thickness and the greater the speed induced on the metallic material in the melted state (6), with the same driving current of the electromagnetic stirring device (2), that is in the absence of control.

The process will therefore not be stable as the conditions of the furnace (1) vary. The effect of the uncontrolled increase in the stirring speed of the metal in the melted state is an increase in the rate of erosion of the refractory material of the bottom of the melting furnace, thus accelerating the wear of the refractory material (16) and further increasing the phenomenon, leading to an early wear of the refractories than expected.

Knowing, by means of an appropriate measuring system, the degree of wear of the refractory material (16), it is possible to control the electromagnetic stirring device (2) or stirrer by reducing the supply current, in order to keep the stirring speed constant of the metallic material in the melted state (6) inside the furnace (1). This control involves various effects, such as, for example, a reduction in the electrical consumption of the electromagnetic stirring device (2) or stirrer and a constancy in the stirring speed value given on the metallic material in the melted state (6).

To overcome the problem of increase of the stirring speed, due, as explained, to the erosion of the refractory material (16), the control system and method of the electromagnetic stirring device (2) or stirrer according to the present invention provides for the use (Fig. 5) of a feedback system to control the power supply current of the electromagnetic stirring device (2) or stirrer depending on the detected thickness (S) of the refractory material (16), or, in an analogous and dual way, depending on the erosion (E) of the refractory material (16), which corresponds to the difference between the initial thickness of the newly installed refractory and the thickness of the refractory following its wear.

The control system (19) therefore comprises (Fig. 5) a sensor (7) for measuring the thickness (S) or, similarly, the erosion (E) of the refractory material (16) of the furnace (1), which sends the measurement of the thickness (S) or of the erosion (E) of the refractory material (16) to a processing unit (9), provided with a controller (10). Preferably, but not necessarily, the sensor (7) communicates with the processing unit (9) via a local unit (8) for the conversion of the signal from the sensor (7) into a thickness measurement signal. The processing unit (9) also acquires a first set of parameters or commands (11) for setting the electromagnetic stirring device (2), such as, for example, a parameter for setting the desired stirring speed, a switching-on or switching-off command of the electromagnetic stirring device (2), which, for example, is switched off during the charging operations of a basket-charged furnace or in the presence of a large quantity of metallic material in the solid state which has still to be melted, such as, for example, in the moments immediately following a charge of material to be melted within the furnace. The processing unit (9) also acquires a second set of parameters or commands (12), such as, for example, process parameters, such as composition of the material to be melted.

For example, among the acquired data there may be a measurement of the thickness of the refractory obtained by means of (Fig. 5, Fig. 8, Fig. 9) a sensor (7) for measuring the thickness of the refractory.

The controller (10) of the control or processing unit (9) processes the thickness (S) or erosion (E) data measured by the sensor (7), the first series of parameters or commands (11) for setting the electromagnetic stirring device (2), the second series of parameters or commands (12), such as, for example, process parameters and it sends a current control signal to the electromagnetic stirring device (2), for example through a power supply panel (13) of the electromagnetic stirring device (2). The power supply panel (13) of the electromagnetic stirring device (2) contains one or more inverters (14) for supplying internal windings of the electromagnetic stirring device (2) and the current control signal sent to the electromagnetic stirring device ( 2) is used as a reference for setting the intensity of the current delivered on the windings of the electromagnetic stirring device (2), in such a way as to generate an electromagnetic stirring field in the furnace which corresponds to a stirring effect of the metal material in the melted state (6), in which the metallic material in the melted state (6) is moved at the desired stirring speed set by means of the first set of parameters or commands (11) for setting the electromagnetic stirring device (2).

The method therefore involves the following steps:
(i) acquisition by a controller (10) of a control unit (9), through a measuring sensor (7), of an initial acquired measurement indicative of the condition of absence of erosion of the refractory (16) of the furnace (1) during the operation of the furnace (1) in a condition of absence of erosion of the refractory (16);
(ii) setting a target value for the stirring speed of the metallic material in the melted state (6) contained in the furnace (1);
(iii) acquisition of the target stirring speed value by a controller (10) of a control unit (9);
(iv) acquisition of a measurement acquired in real time of the thickness of the refractory (16) of the furnace (1) through the measuring sensor (7) by the controller (10) of the control unit (9) during normal operation of the furnace (1) or during the melting process, with setting of an erosion (E) value of the refractory in real time;
(v) comparison of the erosion (E) value of the refractory in real time with the initial acquired measurement indicative of the condition of absence of erosion of the refractory (16);
(vi) setting of a current control signal to the electromagnetic stirring device (2) by the controller (10) of the control unit (9), in which the current control signal is calculated as a function of the difference between the erosion (E) value of the refractory acquired in real time and the initial acquired measurement indicative of the condition of absence of erosion of the refractory (16);
(vii) acquisition of the current control signal by one or more inverters (14) controlling one or more windings of the electromagnetic stirring device (2);
(viii) power supply by the one or more inverters (14) of the one or more windings of the electromagnetic stirring device (2) with a current corresponding to the current control signal, obtaining a stirring speed of the metallic material in the melted state (6) corresponding to the target value of stirring speed.

In particular, the current control signal to be sent to the electromagnetic stirring device (2) by the controller (10) is calculated depending on the difference between the erosion (E) value of the refractory acquired in real time and the initial acquired measurement indicative of the condition of absence of erosion of the refractory (16), so that if the difference increases between the erosion (E) value of the refractory acquired in real time and the initial acquired measurement indicative of the condition of absence of erosion of the refractory (16), the current delivered on the stirring device (2) is correspondingly decreased with obtainment of a constant stirring speed of the metallic material in the melted state (6) contained in the furnace (1) during casting and also in subsequent castings for the entire period between two successive maintenances of the refractory. In this case, during normal operation, phases (ii) to (viii) are repeated, based on phase (i) initially carried out in the operating condition of the furnace, in which the refractory has been correctly restored to the thickness value which is correct and intended for the furnace. When the refractory of the furnace is remade, then, the entire method is repeated from phase (i) to phase (viii) with the acquisition of a new value of the initial acquired measurement indicative of the condition of absence of erosion of the refractory (16) of the furnace (1) and successively phases (ii) to (viii) are repeated, on the basis of phase (i) initially carried out in the condition of operation of the furnace, in which the refractory has been correctly restored to the thickness value which is correct and intended for the furnace. By acting in this way, the current on the stirring device (2) is modulated so as to maintain constant the stirring speed of the metallic material in the melted state (6) in the furnace (1).

The differences due to melted state, different compositions of the metal in the melted state, different temperatures of it are considered negligible compared to the effect induced by the stirring device (2).

With reference to phase (i), that is the acquisition through the measuring sensor (7), of an initial acquired measurement indicative of the condition of absence of erosion of the refractory (16) preferably takes place after the restoration of the furnace refractory, during the first melting after the bath is full, that is after a complete melting of the metallic material introduced in the furnace with the first charges after the restoration of the furnace refractory.

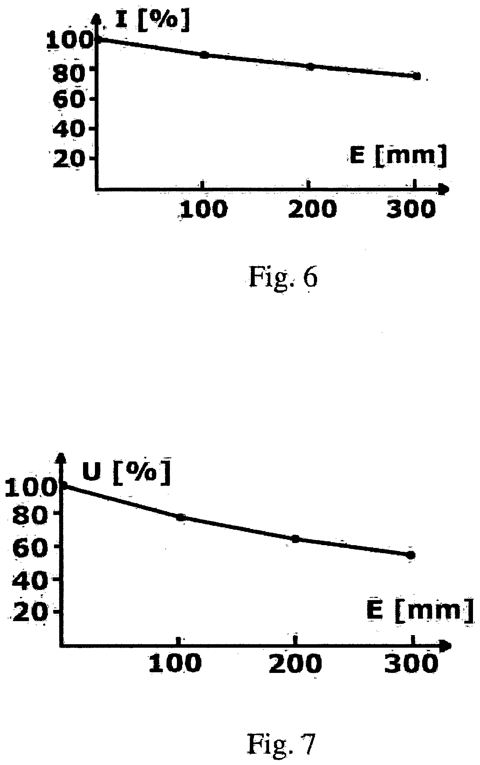

Considering (Fig. 6) a chart of the current (I) depending on the erosion (E) value of the refractory acquired in real time, which represents the percentage reduction of the current (I) applied to the electromagnetic stirring device (2) or stirrer depending on the erosion (E) of the refractory material (16) expressed in millimeters in condition of constant stirring speed set as a reference for the controller, there is an evident reduction of the driving current of the electromagnetic stirring device (2) which, for example, for a 300 mm reduction in thickness of the refractory material (16), can also be of the order of 75% with respect to the driving current necessary to have the same induced stirring speed when the refractory is in an unworn condition, that is new. The greater the wear of the refractory material (16), the smaller its thickness and the less the current supplied for driving the electromagnetic stirring device (2), with the same stirring speed induced on the metallic material in the melted state (6) inside the furnace (1). The reduction of the supply current is reflected in a reduction in the power absorbed by the electromagnetic stirring device (2) and, therefore, also in the energy consumption. Indeed, since the absorbed power is a function of the square of the current, a reduction of the current, for example by 75% as in the previous example, involves a consequent reduction of the absorbed power and, therefore, of the energy consumption (U), which will be therefore about 55% of what is absorbed with the not eroded refractory. Considering (Fig. 7) a chart of the energy consumption (U) depending on the erosion (E) value of the refractory acquired in real time, which represents the percentage reduction of the energy consumption (U) absorbed by the electromagnetic stirring device (2) or stirrer depending on the erosion (E) of the refractory material (16) expressed in millimeters in condition of constant stirring speed set as a reference for the controller, there is an evident reduction in the energy consumption (U) of the electromagnetic stirring device (2) which, for example, for a 300 mm reduction in thickness of the refractory material (16), can also be of the order of 55% with respect to the corresponding energy consumption (U) to have the same stirring speed induced when the refractory is in an unworn condition, that is new. The greater the wear of the refractory material (16), the smaller its thickness and the lower the energy consumption (U) of the electromagnetic stirring device (2), with the same stirring speed induced on the metallic material in the melted state (6) inside the furnace (1).

Therefore, considering a stirring system (20) for melting furnace (1), which is provided with an electromagnetic stirring device (2) combined with a corresponding control system (19) provided with at least one sensor (7) for measurement in real time of the state of erosion of the refractory placed on the bottom of the furnace, and using the signal obtained to create a feedback system on the stirrer power supply, the following results can be obtained:
- constant stirring speed of the metallic material in the melted state (6) in the furnace (1), with consequent uniform effect of the electromagnetic stirring device (2) as the refractory erosion varies. A constant stirring speed involves a more stable and repeatable process and a constant temperature distribution in the furnace as the conditions of the refractory vary, making the heat exchange uniform;
- reduction of the electrical consumption of the electromagnetic stirring device (2). A reduction in the power supply current of the electromagnetic stirring device (2) involves a strong reduction in the power absorbed by the electromagnetic stirring device (2) or stirrer, which allows to reduce the electrical consumption of the electromagnetic stirring device (2) or stirrer;
- reduction of the consumption of refractory material with respect to an application of the electromagnetic stirring device (2) or stirrer without the control system or method described. Without the control system or method on the current of the electromagnetic stirring device (2), the stirring speed would increase, leading to an acceleration of the erosion process of the refractory material.

With reference (Fig. 5) to the sensor (7) for measuring the erosion condition of the refractory (16), it is possible to use different sensors which use different measurement principles.

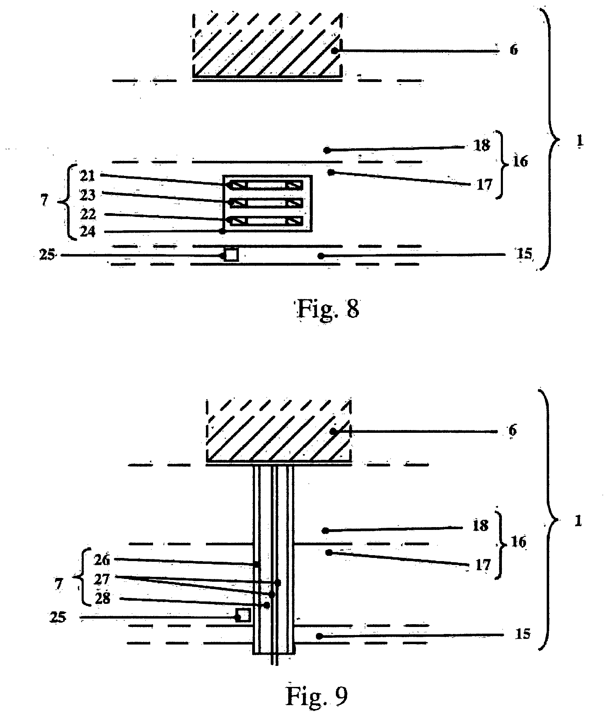

In a first embodiment (Fig. 8), a sensor (7) of electromagnetic type is used. The sensor (7) of electromagnetic type is installed in the first layer (17) of the refractory material (16), that is, in the portion of refractory material (16) corresponding to a non-consumable zone of the refractory itself. The sensor (7) of the electromagnetic type is based on a system comprising three coils (21, 22, 23). The coils (21, 22, 23) comprise a transmission coil (23), a first receiving coil (21) and a second receiving coil (22). The transmission coil (23) is placed between the first receiving coil (21) and the second receiving coil (22). The coils (21, 22, 23) are placed according to a reciprocally coaxial configuration in which a winding plane of the coils of each one of the coils is parallel to the corresponding winding plane of the other coils and the winding centre of each one of the coils is coaxial with respect to the winding centre of the other coils. The transmission coil (23) generates a variable magnetic field. The winding of the first receiving coil (21) and the winding of the second receiving coil (22) are reciprocally connected according to a reciprocal connection configuration which is of anti-phase type. The magnetic field generated by the transmission coil (23) induces eddy currents in the metallic material in the melted state (6) contained in the furnace (1) with corresponding generation of an electromagnetic reaction field which is captured by the first receiving coil (21) and second receiving coil (22). With the system described, the sensor (7) measures the reciprocal unbalanced condition induced due to the presence of electrically conductive material consisting of the metallic material in the melted state (6) contained in the furnace (1). By varying the thickness of the second layer (18) of the refractory material (16), that is of the consumable layer of the refractory material (16), there is an approach to the sensor (7) of the interface between refractory material (16) and metallic material in the melted state (6) contained in the furnace (1). The approach to the sensor (7) of the interface described causes a change in the response of the sensor (7) allowing to obtain a measurement of the thickness of the refractory material (16). There may be an initial calibration phase of the sensor (7) using a non-magnetic steel plate placed on the bottom of the furnace (1) after the restoration of the refractory and before the start of the first casting, thus obtaining an estimate of the initial distance of the interface of the liquid steel during the operation of the EAF furnace, this estimate being used as a reference parameter for the calculation of the measurement on the basis of the signal coming from the receiving coils (21, 22), that is from the first receiving coil ( 21) and second receiving coil (22).

The electrical conductivity of the metallic material in the melted state (6) contained in the furnace (1) does not significantly change around the operating temperature of the furnace and, therefore, its effect on the measurement of the thickness of the refractory is negligible. Similarly, the temperature of the refractory material (16) is irrelevant, as this material is an electrical insulator. The temperature of the slab or bottom wall (15) of the furnace (1), on the other hand, can modify its electrical conductivity and, therefore, in principle it can influence the measurement of the thickness of the refractory. A temperature detector (25) is used to acquire the temperature of the bottom wall (15) of the furnace (1) by the controller (10) of the control unit (9). The application of a compensation algorithm for the measurement of the thickness of the refractory is provided depending on the temperature variation of the slab or bottom wall (15). This type of algorithm is intended, for the purposes of the present invention, to be of a known type or commonly implementable by an expert in the field. The electromagnetic interferences generated by the electric arc of the electrodes of the melting furnace can be suitably filtered or alternatively the measurement can be made when the electrodes (5) of the furnace (1) are off. A hot calibration phase can be easily performed when the consumable refractory is redone, its thickness being indeed known during the first melting of the furnace.

In a second embodiment (Fig. 9) a sensor (7) is used of the type called "TDR", acronym for "Time Domain Refrectometry". The sensor (7) of the TDR type consists of a couple of wires (27) consisting of two metallic electrical conductors separated by an insulating filler material (28) such as for example of the ceramic type, such as alumina. During the operation of the furnace, the second layer (18) of the refractory material (16) is consumed (Fig. 3) and the metallic material in the melted state (6) melts the two electrical conductors of the couple of wires (27), consequently varying their length. The technique called "TDR" allows to estimate the length of the couple of wires (27). The measurement depends on the stability of the dielectric constant of the filler material. In the case of alumina, it depends in a known way on the temperature, therefore, by associating a temperature detector (25) with the TDR sensor for temperature acquisition, it is possible to compensate the estimate obtained by means of the TDR technique with reference to the variation due to temperature. The method using the "TDR" type sensor (7) is particularly immune to electromagnetic interference, but in the event of excessive disturbances the measurement can be made when the electrodes (5) of the furnace (1) are off. The "TDR" type sensor (7) can be installed for example (Fig. 9) by making a suitable hole on the slab or bottom wall (15) of the furnace (1) and inserting it into a housing (26) obtained in the refractory material (16) in correspondence with the bottom wall (15) of the furnace (1). Alternatively, by extending the length of the couple of wires (27), the sensor (7) can be inserted laterally with respect to the furnace (1), making the hole on the side of the furnace (1) instead of in the bottom wall (15).

The stirring device or stirrer (2) is applied (Fig. 1, Fig. 2, Fig. 5) near the bottom of the melting furnace (1).

The stirring device or stirrer (2) which is described hereinafter is particularly suitable for use for the realization of the described power control function depending on the wear state of the refractory since the presence of distinct and independently controllable elements for generating the stirring field allows to obtain a better control of the stirring induced on the bath depending on the state of wear of the refractory, being it possible to control the speed of the movements of the bath effectively and without the need to apply high powers to cause the stirring of the bath even in remote areas. Precisely because of the presence of the different elements of generation of the field, it is indeed possible to produce the stirring effect in a more controlled way, allowing to reduce the stirring speed and, therefore, the greater wear of the refractory, which can therefore be controlled in a more effective way and minimized through piloting of the elements for generating the field according to the methods described hereinafter.

The stirring device or stirrer (2) is controlled by the control or processing unit (9) which manages the different operating modes of the device, the intensity and frequency of the electric current. The controller (10) of the control or processing unit (9) sends a control signal to the electromagnetic stirring device (2), for example through the power supply panel (13) of the electromagnetic stirring device (2). Following the application of the electric current to the stirring device or stirrer (2), a force field is generated which acts on the metallic material in the melted state (6) contained in the furnace (1), causing the establishment of movements of the metallic material in the melted state (6) according to predetermined directions of movement depending on the operating modes through which the stirring device can be controlled. The furnace (1) is provided with a tapping hole (10) through which the metallic material in the melted state (6) can be discharged from the furnace (1) when the required conditions of melting temperature and chemical composition are reached. The stirring device or stirrer (2) comprises a casing (43) containing inside it the elements (31, 32, 33, 34, 35, 36, 39, 49) of generation of the force field. The casing (43) consists of stainless steel panels fixed, for example by means of screws, on a perimetric bearing frame. This solution allows to contain the weight and facilitate maintenance operations and access to the internal windings and to the relative components of the stirrer.

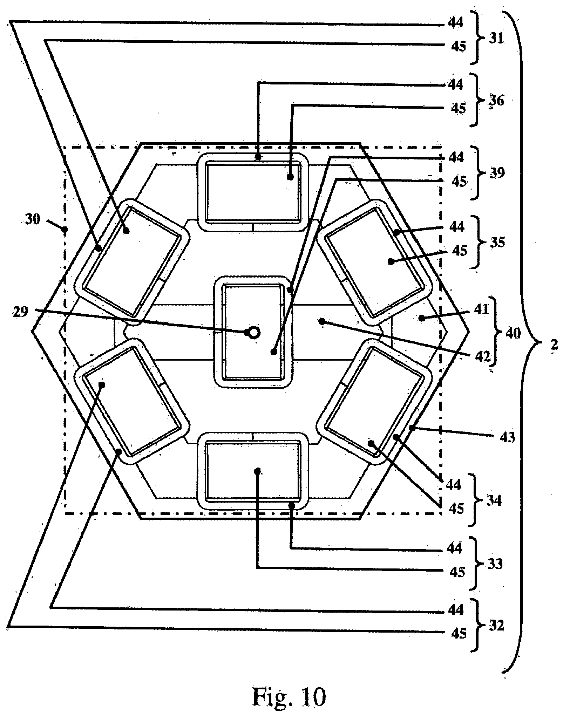

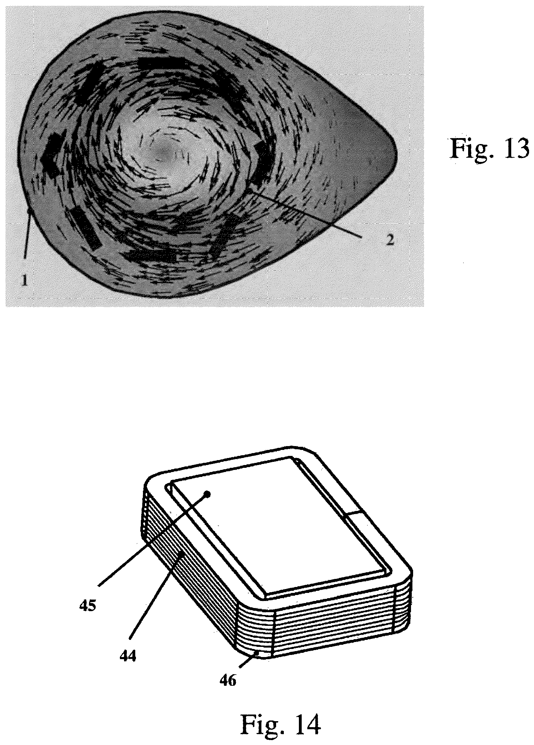

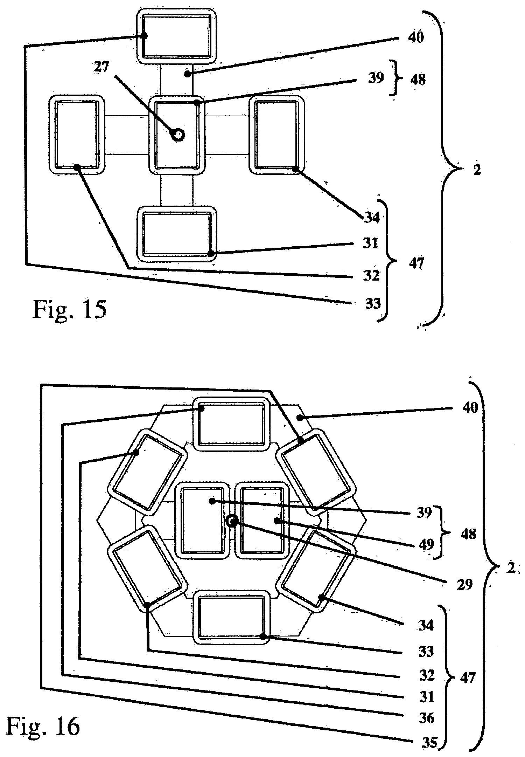

Inside the casing (43), there is (Fig. 10, Fig. 15, Fig. 16) a first series (47) of first elements (31, 32, 33, 34, 35, 36) of generation of the force field. The first series (47) of first elements (31, 32, 33, 34, 35, 36) is placed according to a conformation in which the first elements (31, 32, 33, 34, 35, 36) of the first series (47) are positioned one after another along a closed path. For example, the closed path may have a circular, elliptical, quadrangular, polygonal shape. Furthermore, there is (Fig. 15, Fig. 16) a second series (48) of second elements (39, 49) of generation of the force field. The second series (20) of second elements (39, 49) of generation of the force field is placed internally with respect to the closed path defined by the sequence of the first elements (31, 32, 33, 34, 35, 36) of the first series (47). Each element (31, 32, 33, 34, 35, 36, 39, 49) is a component composed of a rectangular magnetic nucleus (45) on which there is a winding (44). Each winding (44) is composed (Fig. 14) of at least one conductor (46) which is preferably an internally hollow conductor defining an internal passage for the flow of cooling fluid, such as for example cooling water. The solution with internally hollow conductor (46) is adopted to minimize the amount of water present under the furnace as much as necessary for safety reasons in the event of vat breakage, as the contact between water and molten steel can lead to explosive phenomena.

Each element (31, 32, 33, 34, 35, 36, 39, 49) is a replaceable component which is easy and quick to remove as each element is made in the form of an encapsulated component and provided with the necessary quick-coupling connection attachments for making connections both as regards the electrical connections for the passage of the driving current in the conductor (46) and as regards the hydraulic connections for the passage of the cooling fluid, such as for example cooling water, inside the cavity of the conductor (46). Advantageously, this solution allows rapid replacement of one or more of the elements in case of failure. The replacement can take place thanks to the use of quick-coupling connection attachments and it can be easily carried out also by non-expert personnel, without the need to remove the stirring device (2) from the furnace (1). The nucleus (45) is made of iron-magnetic material, in particular of iron-silicon or carbon steel sheet suitably electrically insulated.

In a first embodiment (Fig. 10, Fig. 11, Fig. 12), the first series (47) of first elements (31, 32, 33, 34, 35, 36) comprises a first component (31), a second component (32), a third component (33), a fourth component (34), a fifth component (35), a sixth component (36) which are placed on a perimetric portion (41) of a support (40) in which the perimetric portion (41) has a regular hexagon shape. The second series (48) of second elements consists of a single central seventh element (39) which is placed on a central portion (42) of the support according to a configuration in which the central portion (42) is placed along an axis of conjunction between opposite vertices of the regular hexagon shape. The first series of first elements (31, 32, 33, 34, 35, 36) is placed in such a way that the subsequent elements of the series are positioned on consecutive adjacent sides of the regular hexagon shape. The major axis of the rectangular shape of the nucleus is placed in such a way as to be parallel to one side of the regular hexagon shape of the perimetric portion (41) of the support (40). In this way, each first element (31, 32, 33, 34, 35, 36) is placed in such a way that it is rotated by an angle corresponding to the angle between the sides of the polygon forming the perimetric portion (41), which in the case of hexagonal shape is an angle of 120 degrees.

In a second embodiment (Fig. 15), the first series (47) of first elements (31, 32, 33, 34) comprises a first component (31), a second component (32), a third component (33), a fourth component (34), which are placed on a cross-shaped support (40) with a first arm and a second arm which are reciprocally orthogonal. The second series (48) of second elements consists of a seventh central component (39) placed centrally with respect to the cross-shaped conformation of the support (40), that is centrally with respect to the first elements (31, 32, 33, 34) of the first series (47). The first series (47) of first elements (31, 32, 33, 34) is placed in such a way that the subsequent first elements of the first series are positioned one after another along the support according to a cross arrangement. The major axis of the rectangular shape of the nucleus is placed in such a way as to be orthogonal with respect to the arms of the cross shape of the arrangement of the first series of first elements (31, 32, 33, 34). In this way, each first element (31, 32, 33, 34) is placed in such a way that it is rotated by an angle of 90 degrees with respect to the other first adjacent elements. In the illustrated embodiment (Fig. 15), the support (40) has a cross-shaped conformation with equal arms but embodiments will be possible with one arm greater than the other so as to have a greater spacing with respect to the center of at least one of the first elements, or of two of the first elements, in such a way as to adapt and correspond to a more elongated conformation of the furnace (1) to cover a wider area along a direction between one furnace side in correspondence with which the supply of metallic materials occurs and one opposite furnace side in correspondence with which there is the tapping hole (3).

In a third embodiment (Fig. 16), the second series (48) of elements consists of a seventh component (39) and a further eighth component (49) which are placed on a central portion of the support and symmetrically with respect to the central axis of the stirring device (29). The central portion is placed along a junction axis between opposite vertices of the regular hexagon shape. The first series (47) of first elements (31, 32, 33, 34, 35, 36) is placed in such a way that the subsequent first elements of the first series are positioned on consecutive adjacent sides of the regular hexagon shape. The major axis of the rectangular shape of the nucleus is placed in such a way as to be parallel to one side of the regular hexagon shape of the perimetric portion of the support (40). In this way each first element (31, 32, 33, 34, 35, 36) is placed in such a way that it is rotated by an angle corresponding to the angle between the sides of the polygon forming the perimetric portion (41), which in the case of hexagonal shape is an angle of 120 degrees.

In general, the stirring device (2) or stirrer therefore comprises a number "n" of elements (31, 32, 33, 34, 35, 36, 39, 49) placed according to the described configurations. Each one of the elements (31, 32, 33, 34, 35, 36, 39, 49) is supplied by a corresponding single-phase power source of the inverter (14) and the ensemble of single-phase power sources is controlled in a coordinated way to provide a corresponding ensemble of currents, one for each of the elements (31, 32, 33, 34, 35, 36, 39, 49), in which the currents are reciprocally appropriately shifted with respect to each other in order to generate different configurations of the stirring magnetic force field. In particular, a control unit (9) manages the phase shifts according to a set of operating modes which can be selected manually or automatically according to process execution procedures or automatically according to the expected or envisaged process parameters or automatically according to measured process parameters or a combination of these modes. Therefore, in general, the stirring device or stirrer (2) can work in different operating modes, under the control of the control unit (9) which can be provided with programs for activating and switching between the different operating modes according to the detected or envisaged conditions of the melting process, such as for example in the case of feeding of metallic materials to be melted, progressing of the melting process, increase in the melting percentage, imminence of the tapping phase.

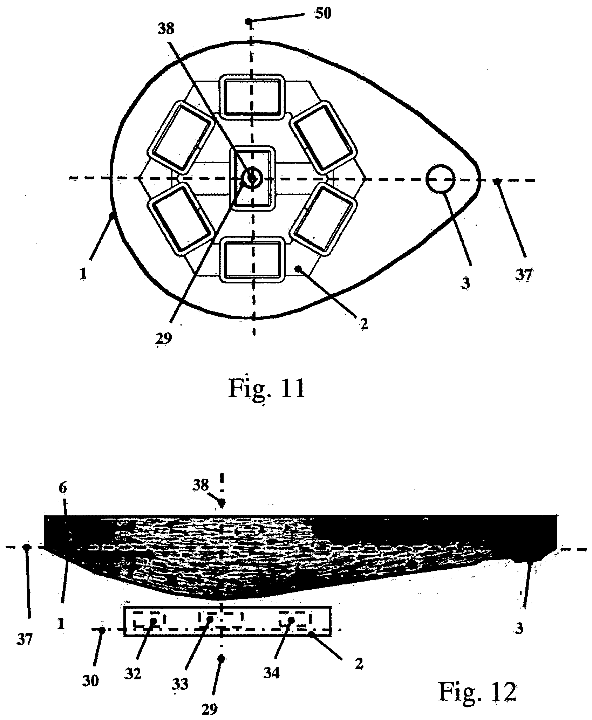

In the illustrative figures of the flows generated (Fig. 12, Fig. 13), the length of the directional arrows is proportional to the speed of the stirrer-induced flow of molten metal and the higher intensity of grayscale coloring corresponds to a faster speed with respect to a lower intensity of grayscale coloring.

A first operating mode, called linear, is used to improve thermal uniformity by bringing the cold steel from the lower part of the furnace to the surface or to heat the tapping area where the tapping hole (3) is present to facilitate the opening of the hole itself during tapping. Furthermore, this mode allows the slag to be moved towards the slagging door, freeing the bath during the tapping phase. This action, combined with the elimination of vortices during tapping, causes a drastic reduction in the passage of slag in the ladle. This method is particularly suitable also in case the metal scrap to be melted is loaded in the center of the furnace (1) or in any case along its axis, such as for example in the so-called furnaces in which the loading takes place by means of a bridge crane or by means of a pre-heated charge basket positioned above the furnace itself and exposed to hot fumes coming from the bath contained in the furnace.

The stirring device or stirrer (2) is placed (Fig. 1, Fig. 2, Fig. 5, Fig. 11, Fig. 12) below the furnace (1), preferably according to a configuration in which a central axis (29) of the stirring device is positioned in the proximity of a central area of the bath of the furnace (1) in such a way that at least one of the first elements of the first series of elements (31, 32, 33, 34, 35, 36) is placed for the generation of the respective force field in an area between the central area of the bath of the furnace (1) and the area of the furnace (1) in correspondence with which there is the tapping hole (3). If there is a second series (48) of second elements (39, 49), such as for example a single second central element consisting of the seventh component (39), then, preferably, the seventh component (39), which is central with respect to the first series of first elements, is positioned in the proximity of a central area of the bath of the furnace (1).

In general at least one of the first elements (31, 32, 33, 34, 35, 36) of the first series (47) is preferably placed for the generation of the respective force field in an area between the central area of the bath of the furnace (1) and the area of the furnace (1) in correspondence with which there is the tapping hole (3) while at least another one of the first elements (31, 32, 33, 34, 35, 36) of the first series (47) is placed for the generation of the respective force field in an opposite area of the furnace (1) with respect to the area in correspondence with which there is the tapping hole (3). Further first elements of the first series (47) of first elements (31, 32, 33, 34, 35, 36) are placed for the generation of the respective force field laterally with respect to a longitudinal axis (37) of the furnace (1), which is an axis passing through the center of the tapping hole (3) and orthogonal with respect to a central axis (38) of the furnace, that is central with respect to the bottom of the furnace and to the respective bath and orthogonal to a transverse axis (50) of the furnace. Longitudinal axis (37), central axis (38) and transverse axis (50) of the furnace form a set of three Cartesian axes with the center of the set of three axes coinciding with a central point of the furnace (1). For example, the central portion (42) of the support (40) of the stirring device or stirrer (2) can be made in the form of a support arm placed along a diameter of the essentially circular configuration of the perimetric portion (41) of the support (40) and this arm can be placed parallel to the longitudinal axis (37) of the furnace (1) with a seventh central component (39) positioned as previously described, that is according to an arrangement in which the seventh central component (39) of the second series (48) of elements is positioned in the proximity of a central area of the bath.

With reference to the previously described linear operating mode, in order to obtain this effect, for example, a first example of operation of the stirring device or stirrer (2) according to the linear mode can be considered, in which the driving configuration is shown in table 1.

**Table 1: example of driving of the elements in linear mode, direct LIN01**

| Element of generation of the force field | Driving current phase shift [°] | Three-phase tern reference R=0°, S= 120°, T=240° |
|---|---|---|
| First component (11) | 0 | R |
| Second component (12) | 0 | R |
| Third component (13) | Not in operation | Not in operation |
| Fourth component (14) | 120 | S |
| Fifth component (15) | 120 | S |
| Sixth component (16) | Not in operation | Not in operation |
| Seventh component (19) | 240 | T |

In practice, in this configuration the elements (31, 32, 33, 34, 35, 36, 39) of generation of the force field are driven with a three-phase current tern according to a configuration in which the first component (31) and the second component (32) are driven with a first 0-degree phase shift reference current, the seventh component (39) is driven with a 120-degree shifted current with respect to the reference current with which the first component (31) and the second component (32) are driven, the fifth component (35) and the sixth component (36) are driven with a 240-degree shifted current with respect to the reference current with which the first component (31) and the second component (32) are driven. The third component (33) and the sixth component (36) are not current driven.

In a first example of operation of the stirring device or stirrer (2) according to a linear mode, with reference to the first embodiment illustrated (Fig. 10, Fig. 11) the first elements of the first series (47) of first elements (31, 32, 33, 34, 35, 36) and the second elements of the second series (48) of second elements (39) are controlled in such a way as to achieve an effect (Fig. 12) on the bath of metallic material in the melted state (6) contained in the furnace (1) in which, considering the median section (Fig. 12) of the furnace (1) on a vertical plane passing through the tapping hole (3) and considering the plan view of the furnace (1):
- in the region (Fig. 12) near the bottom of the furnace (1) and, therefore, closer to the stirrer, the stirring device or stirrer (2) controlled to operate in linear stirring mode, induces a movement in the direction of migration of the magnetic field and therefore of thrust of the metallic material in the melted state (6) along the direction of the longitudinal axis (37) of the furnace (1), for example according to a direction oriented towards the tapping hole (3);
- the flow (Fig. 12) of metallic material in the melted state (6) is then diverted towards the surface of the bath for the deviation action given by the walls of the furnace (1);
- the flow (Fig. 12) of metallic material in the melted state (6) proceeds in the direction opposite to the thrust direction up to about half of the furnace (1);
- in the remaining half of the path (Fig. 12), the surface flow has the same direction as the main thrust flow;
- the effect, considering a plan view, on the surface of the bath of metallic material in the melted state (6) is the creation of two large recirculations, symmetrical with respect to the longitudinal plane of symmetry of the furnace, generated from the meeting of the two counter-current flows described above. The action of these recirculations is the increase in stirring on the sides of the furnace, optimizing thermal and chemical homogenization.

The main effects given by the movement of the fluid represented in this section are thermal homogenization between the surface, which is warmer, and the bottom of the furnace, which is colder, supply of hot steel in the area of the tapping hole, an action which increases the rate of spontaneous openings of the EBT, elimination of the vortex which is formed during tapping with consequent reduction of a possible passage of slag in the ladle, reduction of the quantity of slag above the tapping hole which is pushed towards the deslagging door, with consequent reduction of the passage of the slag in the ladle.

A linear configuration with motion reversal is further possible with respect to the previous configuration described in table 1. This solution is shown in a second example of operation in table 2. The configurations defined as referring to a motion reversal are configurations which refer to a driving of the elements which is such as to correspond to a generation of induced motion in the bath in which the motion has a direction opposite to the one of a corresponding direct driving configuration.

**Table 2: example of driving of the elements in linear mode with reversal, reverse LIN01**

| Element of generation of the field | Driving current phase shift [°] | Three-phase tern reference R=0°, S= 120°, T=240° |
|---|---|---|
| First component (11) | 0 | R |
| Second component (12) | 0 | R |
| Third component (13) | Not in operation | Not in operation |
| Fourth component (14) | 240 | T |
| Fifth component (15) | 240 | T |
| Sixth component (16) | Not in operation | Not in operation |
| Seventh component (19) | 120 | S |

The effect on the surface of the bath of metallic material in the molten metal (6) is similar to the one of the configuration of Table 1, as we have also in this case the creation of two large recirculations, symmetrical with respect to the longitudinal plane of symmetry of the furnace, generated by the meeting of two counter-current flows but the direction of the molten steel movements inside the furnace is opposite with respect to the previous example.

Further configurations which correspond to linear operating modes, different from the one previously described are for example the following.

With reference to the linear operating mode, a third example of operation is shown in table 3.

**Table 3: example of driving of the elements in linear mode, direct LIN02**

| Element of generation of the field | Driving current phase shift [°] | Three-phase tern reference R=0°, S= 120°, T=240° |
|---|---|---|
| First component (11) | Not in operation | Not in operation |
| Second component (12) | 0 | R |
| Third component (13) | Not in operation | Not in operation |
| Fourth component (14) | Not in operation | Not in operation |
| Fifth component (15) | 120 | S |
| Sixth component (16) | Not in operation | Not in operation |
| Seventh component (19) | 240 | T |

With reference to the linear operating mode, a fourth example of operation of the stirring device or stirrer (2) in linear mode can be considered, in which the driving configuration is shown in table 4.

**Table 4: example of driving of the elements in linear mode, direct LIN03**

| Element of generation of the field | Driving current phase shift [°] | Three-phase tern reference R=0°, S= 120°, T=240° |
|---|---|---|
| First component (11) | Not in operation | Not in operation |
| Second component (12) | 0 | R |
| Third component (13) | 0 | R |
| Fourth component (14) | Not in operation | Not in operation |
| Fifth component (15) | 120 | S |
| Sixth component (16) | 120 | S |
| Seventh component (19) | 240 | T |

The effect on the surface of the bath of metallic material in the melted state (6) of the configuration shown in the previous table creates a stirring effect on the bath of molten metal within the furnace (1) with the creation of three recirculations.

A linear configuration with motion reversal is further possible with respect to the configuration described in the previous table, to be considered as a fifth example of operation of the stirring device or stirrer (2) in linear mode. This solution is shown in table 5. The configurations defined as referring to a motion reversal are configurations which refer to a driving of the elements which is such as to correspond to a generation of induced movement in the bath in which the movement has a direction opposite to the one of a corresponding direct driving configuration.

**Table 5: example of driving of the elements in linear mode with reversal, reverse LIN03**

| Element of generation of the field | Driving current phase shift [°] | Three-phase tern reference R=0°, S= 120°, T=240° |
|---|---|---|
| First component (11) | Not in operation | Not in operation |
| Second component (12) | 0 | R |
| Third component (13) | 0 | R |
| Fourth component (14) | Not in operation | Not in operation |
| Fifth component (15) | 240 | T |
| Sixth component (16) | 120 | S |
| Seventh component (19) | 120 | S |

The effect on the surface of the bath of metallic material in the melted state (6) is the creation of a large recirculation in an asymmetrical position with respect to the axis of the furnace (1).

With reference to the linear operating mode, a sixth example of operation of the stirring device or stirrer (2) in linear mode can be considered, in which the driving configuration of the elements (31, 32, 33, 34, 35, 36, 39) of generation of the force field is shown in table 6.

**Table 6: example of driving of the elements in linear mode, direct LIN04**

| Element of generation of the field | Driving current phase shift [°] | Three-phase tern reference R=0°, S= 120°, T=240° |
|---|---|---|
| First component (11) | 0 | R |
| Second component (12) | Not in operation | Not in operation |
| Third component (13) | Not in operation | Not in operation |
| Fourth component (14) | 120 | S |
| Fifth component (15) | Not in operation | Not in operation |
| Sixth component (16) | Not in operation | Not in operation |
| Seventh component (19) | 240 | T |

With reference to the linear mode of operation, a seventh example of operation of the stirring device or stirrer (2) according to the linear mode can be considered, in which the driving configuration is shown in table 7.

**Table 7: example of driving of the elements in linear mode, direct LIN05**

| Element of generation of the field | Driving current phase shift [°] | Three-phase tern reference R=0°, S= 120°, T=240° |
|---|---|---|
| First component (11) | 0 | R |
| Second component (12) | Not in operation | Not in operation |
| Third component (13) | 120 | S |
| Fourth component (14) | 120 | S |
| Fifth component (15) | Not in operation | Not in operation |
| Sixth component (16) | 0 | R |
| Seventh component (19) | 240 | T |

Given the condition of symmetry of the stirrer (2) and of the furnace (1), the image of the effect on the surface of the bath of metallic material in the melted state (6) is symmetrical with respect to the one reported for the configuration in table 4 for the direct driving configuration and three recirculations are created but with opposite directions of rotation with respect to those indicated.

The same considerations also apply to a corresponding linear operating mode with motion reversal with respect to the configuration described in the previous table, to be considered as an eighth example of operation of the stirring device or stirrer (2) in linear mode. This solution is shown in table 8 and the effect on the surface of the bath of metallic material in the melted state (6) will be symmetrical with respect to the one obtained with the configuration of table 5.

**Table 8: example of driving of the elements in linear mode with reversal, reverse LIN05**

| Element of generation of the field | Driving current phase shift [°] | Three-phase tern reference R=0°, S= 120°, T=240° |
|---|---|---|
| First component (11) | 0 | R |
| Second component (12) | Not in operation | Not in operation |
| Third component (13) | 240 | T |
| Fourth component (14) | 240 | T |
| Fifth component (15) | Not in operation | Not in operation |
| Sixth component (16) | 0 | R |
| Seventh component (19) | 120 | S |

With reference to the linear mode of operation, a ninth example of operation of the stirring device or stirrer (2) according to the linear mode can be considered, in which the driving configuration is shown in table 9.

**Table 9: example of driving of the elements in linear mode, direct LIN06**

| Element of generation of the field | Driving current phase shift [°] | Three-phase tern reference R=0°, S= 120°, T=240° |
|---|---|---|
| First component (11) | Not in operation | Not in operation |
| Second component (12) | Not in operation | Not in operation |
| Third component (13) | 0 | R |
| Fourth component (14) | Not in operation | Not in operation |
| Fifth component (15) | Not in operation | Not in operation |
| Sixth component (16) | 120 | S |
| Seventh component (19) | 240 | T |

This last configuration is particularly interesting for continuous charging furnaces with lateral charging of the scrap, as it allows to force the flow of liquid steel in the charging area favoring the melting of the scrap just introduced. In particular, it is highlighted that with this configuration a movement of the metal in the melted state is induced with a direction orthogonal to the longitudinal plane of the furnace.

A similar inverse configuration would have a symmetrical effect to what is represented with reference to the direct configuration.

In general, the exemplary solutions described in the figures and corresponding to the indicated tables of driving configuration of the elements (31, 32, 33, 34, 35, 36, 39) of generation of the force field, allow to obtain flow movements of liquid steel affecting the entire steel bath with considerable benefits from the point of view of uniformity of temperature and composition, as well as benefits from the economic point of view for the reduction of the need to apply function power for longer times and for the reduction of the period between one casting and the next.

A second operating mode, called rotary, is used to facilitate melting of the scrap if it is inserted into the furnace not centrally but laterally in correspondence with a position along the sides of the furnace. This configuration is advantageous in that it allows liquid metal and, therefore, heat to be applied to the areas where the scrap lies after its introduction into the furnace (1). In order to obtain this effect, for example, it is possible to use the following driving configuration.

**Table 10: example of driving of the elements in rotary mode**

| Element of generation of the field | Driving current phase shift [°] | Three-phase tern reference R=0°, S= 120°, T=240° |
|---|---|---|
| First component (11) | 0 | R |
| Second component (12) | 60 | -S |
| Third component (13) | 120 | T |
| Fourth component (14) | 180 | -R |
| Fifth component (15) | 240 | S |
| Sixth component (16) | 300 | -T |
| Seventh component (19) | Not in operation | Not in operation |

In practice, in this configuration the elements (31, 32, 33, 34, 35, 36, 39) of generation of the force field are driven with a three-phase current tern according to a configuration in which the first component (31) is driven with a first 0-degree phase-shift reference current and the successive adjacent components along the previously defined closed path defined by the sequence of first elements (31, 32, 33, 34, 35, 36) of generation of the force field of the first series are in turn driven with currents gradually shifted by 60 degrees with respect to the adjacent element of the sequence of elements. In the rotary mode, with reference to the first illustrated embodiment (Fig. 10, Fig. 11) the first elements of the first series (47) of elements (31, 32, 33, 34, 35, 36) are controlled in such a way as to generate an effect (Fig. 13) on the bath of metallic material in the melted state (6) contained in the furnace (1) in which the molten metal is rotated with respect to the central axis of the furnace. This stirring mode is particularly suitable in the case of lateral charging of scrap in the furnace since it is able to bring large quantities of hot steel into the scrap area, avoiding the formation of cold air and significantly increasing the melting rates of the scrap itself.

With reference to both the linear operating mode and the rotary operating mode, the inverse operating mode with motion reversal is available, as already explained, in which in order to reverse the direction of migration of the field in the linear configuration or the direction of rotation in the rotary one, a permutation is sufficient of the reference tern of the three-phase system, changing the phase shifts of only a pair of phases, for example RTS or SRT.

In general the present invention refers to an electromagnetic stirring device (2) for melting furnace (1) of metallic material in which a melting process occurs, in which the furnace (1) includes a metal bottom wall (15) covered with refractory material (16), the stirring device (2) being placed below the furnace (1) at the bottom wall (15), in which below is referred to with respect to the gravity direction, the stirring device (2) generating an electromagnetic force field which is at least partially situated inside the furnace (1) for electromagnetic stirring action on molten metal contained inside the furnace (1), the stirring device (2) comprising a control unit (9) of the stirring device (2), configured for controlling a driving power of the stirring device (2). The stirring device (2) includes at least one sensor (7) for measuring the thickness (S) of the refractory material (16) of the furnace (1), in which the control unit (9) includes a controller (10) for reception of a measure of thickness (S) of the refractory material by means of the measuring sensor (7) during the melting process, the controller (10) comprising processing means, such as for example a processor, configured for determining the driving power of the stirring device (2) depending on the measure of thickness (S) of the refractory material. In the present invention, the regulation phase of the driving power of the stirring device (2) depending on the measure of thickness (S) of the refractory material is such that a reduction of the measure of thickness (S) corresponds to a reduction of the driving power of the stirring device (2).

The sensor (7) for measuring the measure of thickness (S) of the refractory material is suitable for being installed in the refractory material (16) and can be the previously described sensor of the electromagnetic type or the previously described sensor comprising a couple of wires (27) consisting of two metallic electrical conductors separated by an insulating filler material (28), such as for example of ceramic type suitable for being inserted in the refractory material (16) in correspondence with a portion of the refractory material (16) subject to erosion in such a way that the erosion of the refractory material causes the consumption of the couple of wires (27) for estimation of the length reduction of the couple of wires (27) by means of a measuring phase of the impedance of the couple of wires (27).

In general, the electromagnetic stirring device (2) includes a control system of the current of the elements of generation of the force field in which the control system of the current supplies a current proportional to a control signal which depends on the measurement of the thickness (S) of the refractory material (16) of the furnace (1).

The electromagnetic stirring device (2) for melting furnace (1) of metallic material (Fig. 1, Fig. 2, Fig. 5, Fig. 10, Fig. 11, Fig. 15, Fig. 16) is a stirring device (2) which is placed below the furnace (1), in which below is referred to with respect to the gravity direction, the stirring device (2) being installed in correspondence with a bottom of the melting furnace (1), in such a way that a force field of the electromagnetic stirring device (2) is at least partially situated inside the melting furnace (1) for electromagnetic stirring action on molten metal contained inside the melting furnace (1), in which the stirring device (2) comprises at least one element (31, 32, 33, 34, 35, 36, 39, 49) configured for generating a respective electromagnetic field, in which the element (31, 32, 33, 34, 35, 36, 39, 49) is composed of a magnetic nucleus (45) on which there is a winding (44) for the passage of current and generation of a respective magnetic field, the stirring device (2) comprising a control unit (9) for controlling the stirring device (2). The electromagnetic stirring device (2) comprises at least one first series (47) of first elements (31, 32, 33, 34, 35, 36) of generation of the force field which are placed according to a shape in which the first elements (31, 32, 33, 34, 35, 36) of the first series (47) are placed one after another on an assembly plane (30), in which the assembly plane (30) is suitable for being parallel to the bottom of the melting furnace (1) when the electromagnetic stirring device (2) is in the installed condition in correspondence with the bottom of the melting furnace (1), the first elements (31, 32, 33, 34, 35, 36) being placed around a central axis of the stirring device (29) which is an orthogonal central axis with respect to the assembly plane (30). Preferably the first elements (31, 32, 33, 34, 35, 36) are placed along a closed path which develops on the assembly plane (30). For example the first elements (31, 32, 33, 34, 35, 36) of the first series (47) can be placed on the assembly plane (30) according to a centrally symmetrical arrangement with respect to the central axis of the stirring device (29) in which the central axis is centrally passing with respect to the closed path along which the first elements (31, 32, 33, 34, 35, 36) of the first series (47) are placed. In the preferred solution of the present invention, each one of the first elements (31, 32, 33, 34, 35, 36) of the first series (47) is placed on the assembly plane (30) according to an arrangement in which each one of the first elements (31, 32, 33, 34, 35, 36) is oriented in such a way that a major axis of a quadrangular shape of the magnetic nucleus (45) is placed tangentially with respect to the closed arrangement path of the first series (47) of first elements (31, 32, 33, 34, 35, 36). In one embodiment (Fig. 15) the electromagnetic stirring device (2) comprises four first elements of the first series (47) in which the four first elements (31, 32, 33, 34) are placed on the assembly plane (30) according to a cross arrangement with a first pair (31, 33) of first elements placed at opposite ends of a first arm of the cross arrangement and a second pair (32, 34) of first elements placed at opposite ends of a second arm of the cross arrangement. For example, a center of intersection between first arm and second arm of the cross arrangement may coincide with the central axis of the stirring device (29). In one embodiment (Fig. 10), the electromagnetic stirring device (2) comprises six first elements (31, 32, 33, 34, 35, 36) of the first series (47) in which the six first elements (31, 32, 33, 34, 35, 36) are placed on the assembly plane (30) according to a hexagonal arrangement with a first pair (31, 34) of first elements arranged on a first pair of opposite sides of the hexagonal arrangement, a second pair (32, 35) of first elements arranged on a second pair of opposite sides of the hexagonal arrangement, a third pair (33, 36) of first elements arranged on a third pair of opposite sides of the hexagonal arrangement.

In general, the first elements (31, 32, 33, 34, 35, 36) of the first series (47) are controlled by the control unit (9) independently of one another for application of reciprocally shifted alternating currents for generation of the force field in such a way that the force field induces movements on the metallic material contained inside the melting furnace (1) which are configurable depending on different sequences of application of the reciprocally shifted alternating currents independently applied on the first elements (31, 32, 33, 34, 35, 36) of the first series (47). Furthermore the electromagnetic stirring device (2) can also include one or more further second internal elements (39, 49) of generation of the force field, further with respect to the first elements (31, 32, 33, 34, 35, 36) of the first series (47), in which the one or more second internal elements (39, 49) are placed internally with respect to the ensemble of the first elements (31, 32, 33, 34, 35, 36) of the first series (47). In one solution (Fig. 16) the electromagnetic stirring device (2) includes more than one of said further second internal elements (39, 49) of generation of the force field, in which the further second internal elements (39, 49) form a second series (48) of second internal elements (39, 49) of generation of the force field which are placed according to a shape in which the second internal elements (39, 49) of the second series (48) are placed internally with respect to the ensemble of the first elements (31, 32, 33, 34, 35, 36) of the first series (47). However, it will be evident that for the purposes of the present invention even the presence of only one second internal element (39, 49) is sufficient to obtain the previously described operating configurations, the presence of further second elements being possibly useful in order to strengthen the effect of some operating modes of the linear typology described, or being possibly useful in furnaces with particularly large longitudinal extension. The second elements (39, 49) of the second series (48) are preferably controlled by the control unit (9) independently of one another for application of reciprocally shifted alternating currents for generation of the force field in such a way that the force field induces motions on the metallic material contained inside the melting furnace (1) which are configurable depending on different sequences of application of the reciprocally shifted alternating currents independently applied on the second elements (39, 49) of the second series (48). However, in some operating modes one or more second elements (39, 49) can be controlled with the same driving current. In general, the one or more further second internal elements (39, 49) are controlled by the control unit (9) independently with respect to the first elements (31, 32, 33, 34, 35, 36) of the first series (47), but in some preferred embodiments or in different control modes of the stirring device (2), the one or more further second internal elements (39, 49) are controlled by the control unit (9) in a coordinated way together with the first elements (31, 32, 33, 34, 35, 36) of the first series (47) for application of reciprocally shifted alternating currents for generation of the force field in such a way that the force field induces movements on the metallic material contained inside the melting furnace (1) which are configurable depending on different sequences of application of the reciprocally shifted alternating currents applied in a coordinated way on the one or more further second internal elements (39, 49) of the second series (48) and on the first elements (31, 32, 33, 34, 35, 36) of the first series (47).

In the preferred embodiment of the present invention, the control unit (9) includes a commutation system between at least two operating modes of the electromagnetic stirring device (2), of which:
- a first operating mode is a rotary operating mode in which the one or more second internal elements (39, 49) are in a deactivated condition and the first elements (31, 32, 33, 34, 35, 36) are driven with a three-phase tern of currents according to a configuration in which each one of the first elements (31, 32, 33, 34, 35, 36) is driven with a respective shifted current with respect to another element of the first elements (31, 32, 33, 34, 35, 36), which is previous or subsequent with respect to a deposition sequence of the elements on the assembly plane (30), in such a way that the molten metal is in rotational condition around a central axis (38) of the furnace according to a first rotational direction;
- a second operating mode is a linear operating mode in which the one or more second internal elements (39, 49) are in an activated condition together with the first elements (31, 32, 33, 34, 35, 36), the one or more second internal elements (39, 49) and the first elements (31, 32, 33, 34, 35, 36) being driven with a three-phase tern of currents according to a configuration in which at least one of the one or more second internal elements (39, 49) is driven with a respective shifted current with respect to corresponding driving currents of one or more elements of the first series (47) of the first elements (31, 32, 33, 34, 35, 36) in such a way that the molten metal is in rotational condition around different rotational zones with generation of plural different circulation movements inside the furnace in which each circulation movement has a first rotational direction.

The commutation system can include a rotary inversion system of the motion of the first rotary operating mode in which the rotary inversion system of the motion controls the shifted driving condition of the first elements (31, 32, 33, 34, 35, 36) in such a way that the molten metal is in rotational condition around the central axis (38) of the furnace according to a second rotational direction which is opposite with respect to the first rotational direction.

The commutation system can include a linear inversion system of the motion of the second linear operating mode in which the linear inversion system of the motion controls the shifted driving condition of the first elements (31, 32, 33, 34, 35, 36) and of the one or more second elements (39, 49) in such a way that the molten metal is in rotational condition around said different rotational zones with generation of plural different circulation movements inside the furnace in which at least one circulation movement has a second rotational direction opposite with respect to the first rotational direction. It can also be provided that each circulation movement has a second rotational direction opposite with respect to the first rotational direction.

The present invention also refers to a control method of an electromagnetic stirring device (2) as described, in which the stirring device (2) includes at least one sensor (7) for measuring the thickness (S) of the refractory material (16) of the furnace (1), the method comprising a regulation phase of the driving power of the stirring device (2) in which the regulation phase of the power includes the following steps:
- acquisition by the control unit (9) of a measure of thickness (S) of the refractory material by means of the measuring sensor (7) during the melting process;
- regulation of the power depending on the measure of thickness (S) of the refractory material.

In the present invention, the regulation phase of the power depending on the measure of thickness (S) of the refractory material is such that a reduction of the measure of thickness (S) corresponds to a reduction of the driving power of the stirring device (2).

The control method includes an initial calibration phase comprising an acquisition phase of a measure of initial thickness (S) of the refractory material by means of the measuring sensor (7) in condition of absence of erosion of the refractory (16).

The regulation phase of the power depending on the measure of thickness (S) of the refractory material includes a comparison phase between the measure of thickness (S) of the refractory material during the melting process and the measure of initial thickness (S) in condition of absence of erosion of the refractory (16), a calculation phase of the power for maintenance of a target value of stirring speed of the metallic material in the melted state (6) depending on the reduction of the thickness (S) of the refractory material during the melting process, regulation of the power for obtainment of an actual stirring speed independent of the erosion condition of the refractory material. The regulation phase of the power for obtainment of an actual stirring speed independent of the erosion condition of the refractory material is preferably a setting phase of a control signal of current of the electromagnetic stirring device (2), in which the current control signal is calculated depending on the difference between the measure of initial thickness (S) in condition of absence of erosion of the refractory (16) and the measure of thickness (S) of the refractory material during the melting process.

The acquisition phase of the measure of thickness (S) can occur by means of a measuring sensor (7) of electromagnetic type, which is suitable for being installed in the refractory material (16), the sensor comprising a transmission coil (23), a first receiving coil (21) and a second receiving coil (22) in which the transmission coil (23) is placed between the first receiving coil (21) and the second receiving coil (22) and the coils (21, 22, 23) are placed according to a reciprocally coaxial configuration in which a winding plane of the coils of each one of the coils is parallel to the corresponding winding plane of the other coils and the winding centre of each one of the coils is coaxial with respect to the winding centre of the other coils, the winding of the first receiving coil (21) and the winding of the second receiving coil (22) being reciprocally connected according to a reciprocal connection configuration which is of anti-phase type, the acquisition phase of the measure comprising the generation of a magnetic field by means of the transmission coil (23) and the detection of a corresponding reaction field by means of the first receiving coil (21) and the second receiving coil (22) for calculation of the measure of thickness (S) depending on a reciprocal unbalanced condition induced between the first receiving coil (21) and the second receiving coil (22) due to presence of electrically conductive material consisting of the metallic material in the melted state (6) contained in the furnace (1). The acquisition phase of the measure of thickness (S) of the refractory material can occur by means of a measuring sensor (7) comprising a couple of wires (27) consisting of two metallic electrical conductors separated by an insulating filler material (28) such as for example of ceramic type, suitable for being inserted in the refractory material (16) in correspondence with a portion of the refractory material (16) subject to erosion, in such a way that the erosion of the refractory material causes the consumption of the couple of wires (27), the acquisition phase of the measure comprising a phase of estimation of the length reduction of the couple of wires (27) by means of a measuring phase of the impedance of the couple of wires (27).

The method can include a control phase of the first elements (31, 32, 33, 34, 35, 36) in which the first elements (31, 32, 33, 34, 35, 36) are driven with a three-phase tern of currents according to a configuration in which each one of the first elements (31, 32, 33, 34, 35, 36) is driven with a respective shifted current with respect to another element of the first elements (31, 32, 33, 34, 35, 36) which is previous or subsequent with respect to a deposition sequence of the elements on the assembly plane (30). In the case of embodiment of stirring device (2) also including one or more further second internal elements (39, 49) of generation of the force field, further with respect to the first elements (31, 32, 33, 34, 35, 36) of the first series (47), the method includes a coordinated control phase of the first elements (31, 32, 33, 34, 35, 36) and of the one or more second internal elements (39, 49), in which the one or more second internal elements (39, 49) and the first elements (31, 32, 33, 34, 35, 36) are driven with a three-phase tern of currents according to a configuration in which at least one of the one or more second internal elements (39, 49) is driven with a respective shifted current with respect to corresponding driving currents of one or more elements of the first series (47) of the first elements (31, 32, 33, 34, 35, 36).

In the preferred embodiment of the control method of the electromagnetic stirring device (2), the method includes a commutation phase between at least two operating modes of the electromagnetic stirring device (2), of which:
- a first operating mode is a rotary operating mode in which the one or more second internal elements (39, 49) are in a deactivated condition and the first elements (31, 32, 33, 34, 35, 36) are driven with a three-phase tern of currents according to a configuration in which each one of the first elements (31, 32, 33, 34, 35, 36) is driven with a respective shifted current with respect to another element of the first elements (31, 32, 33, 34, 35, 36), which is previous or subsequent with respect to a deposition sequence of the elements on the assembly plane (30), in such a way that the molten metal is in rotational condition around a central axis (38) of the furnace according to a first rotational direction;
- a second operating mode is a linear operating mode in which the one or more second internal elements (39, 49) are in an activated condition together with the first elements (31, 32, 33, 34, 35, 36), the one or more second internal elements (39, 49) and the first elements (31, 32, 33, 34, 35, 36) being driven with a three-phase tern of currents according to a configuration in which at least one of the one or more second internal elements (39, 49) is driven with a respective shifted current with respect to corresponding driving currents of one or more elements of the first series (47) of the first elements (31, 32, 33, 34, 35, 36), in such a way that the molten metal is in rotational condition around different rotational zones with generation of plural different circulation movements inside the furnace in which each circulation movement has a first rotational direction.

Furthermore, the method can include an inversion phase of the rotary operating mode in which the first elements are driven with a three-phase tern of currents according to a configuration in which each one of the first elements (31, 32, 33, 34, 35, 36) is driven with a respective shifted current with respect to another element of the first elements (31, 32, 33, 34, 35, 36) which is previous or subsequent with respect to a deposition sequence of the elements on the assembly plane (30), in such a way that the molten metal is in rotational condition around a central axis (38) of the furnace according to a second rotational direction which is opposite with respect to the first rotational direction. Furthermore, the method can include an inversion phase of the linear operating mode in which the one or more second internal elements (39, 49) and the first elements (31, 32, 33, 34, 35, 36) are driven with a three-phase tern of currents according to a configuration in which at least one of the one or more second internal elements (39, 49) is driven with a respective shifted current with respect to corresponding driving currents of one or more elements of the first series (47) of the first elements (31, 32, 33, 34, 35, 36) in such a way that the molten metal is in rotational condition around different rotational zones with generation of plural different circulation movements inside the furnace in which at least one circulation movement has a second rotational direction opposite to the first rotational direction.

The present invention also refers to a melting furnace (1) of metallic material, in which the furnace (1) includes an electromagnetic stirring device (2) placed below with respect to a wall in correspondence with a bottom of the melting furnace (1) in such a way that a force field of the electromagnetic stirring device (2) is at least partially situated inside the melting furnace (1) for electromagnetic stirring action on molten metal contained inside the melting furnace (1) in which the electromagnetic stirring device (2) is controlled according to a control method of the electromagnetic stirring device (2) made as described.

It is provided that the elements (31, 32, 33, 34, 35, 36, 39, 49) of generation of the force field can be driven with currents which are controlled by a control signal which can be pure sinusoidal or non-pure sinusoidal. For example, the elements of generation of the force field can be driven with a current which is controlled by a control signal which is a regular square wave. For example, the elements of generation of the force field can be driven with a current which is controlled by a control signal, which is a square wave of the type usually identified as a modified sinusoidal wave, which is a wave shape provided with steps similar in its characteristics to a pure sinusoidal wave, with positive portions of square wave separated from negative portions of square wave by intervals of no current delivery. For example, the elements of generation of the force field can be driven with a current which is controlled by a control signal, which is an amplitude modulated sinusoidal wave. For example, the elements of generation of the force field can be driven with a current, which is controlled by a control signal which is a frequency modulated sinusoidal wave. In general, therefore, it is provided that the device includes a control system of the current of the elements of generation of the force field, in which the current control system delivers a current proportional to a control signal which is selected between control signal in the form of a pure sinusoidal wave and a non-pure sinusoidal wave. With regards to the inventive method, similarly, a control phase is provided by means of a control system of the current of generation of the force field, in which the control phase controls the current delivered so that it is a current proportional to a control signal, which is selected between control signal in the form of pure sinusoidal wave and non-pure sinusoidal wave. These solutions are advantageous, as through different waveforms with respect to the pure sinusoidal one it is possible to obtain a lower energy consumption obtaining the same mixing effect which would be obtained with a pure sinusoidal form.

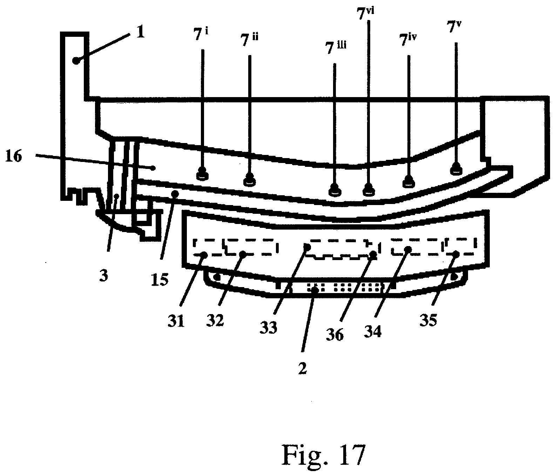

In one embodiment (Fig. 17) the electromagnetic stirring device (2) for furnace comprises a series (7ⁱ, 7ⁱⁱ, 7ⁱⁱⁱ, 7^{iv}, 7^{v}, 7^{vi}) of measuring sensors (7) in which each sensor of the series (7ⁱ, 7ⁱⁱ, 7ⁱⁱⁱ, 7^{iv}, 7^{v}, 7^{vi}) of sensors (7) is placed in a respective different measuring zone with respect to the measuring zone of another of the sensors of the series (7ⁱ, 7ⁱⁱ, 7ⁱⁱⁱ, 7^{iv}, 7^{v}, 7^{vi}) of sensors (7). For example, a first sensor (7ⁱ) can be placed near a first component (31), a second sensor (7ⁱⁱ) can be placed near a second component (32), a third component (7ⁱⁱⁱ) can be placed near a third component (33), a fourth sensor (7^{iv}) can be placed near a fourth component (34), a fifth sensor (7^{v}) can be placed near a fifth component (35), a sixth sensor (7^{vi}) can be placed near a sixth component (36). In the same way, there can be corresponding sensors placed near the elements of the second series (39, 49) such as for example a seventh sensor placed near a seventh component (39) and an eighth sensor placed near an eighth component (49).

In this case, the control method of stirring device (2) may provide a regulation phase of the power which is a regulation phase of the power in an independent way for each one of the first elements (31, 32, 33, 34, 35, 36) in which the power of each one of the first elements (31, 32, 33, 34, 35, 36) is regulated following said acquisition phase of measure of thickness (S) of the refractory material, in which the acquisition phase of measure of thickness (S) is a multiple acquisition phase of the thickness (S) of the refractory material by means of a series (7ⁱ, 7ⁱⁱ, 7ⁱⁱⁱ, 7^{iv}, 7^{v}, 7^{vi}) of measuring sensors (7) in which each sensor of the series (7ⁱ, 7ⁱⁱ, 7ⁱⁱⁱ, 7^{iv}, 7^{v}, 7^{vi}) of sensors (7) is placed in a respective different measuring zone with respect to the measuring zone of another of the sensors of the series (7ⁱ, 7ⁱⁱ, 7ⁱⁱⁱ, 7^{iv}, 7^{v}, 7^{vi}) of sensors (7), the regulation of the power for each one of the first elements (31, 32, 33, 34, 35, 36) being a regulation phase which occurs depending on said measure of thickness (S) carried out by means of one of said sensors of the series (7ⁱ, 7ⁱⁱ, 7ⁱⁱⁱ, 7^{iv}, 7^{v}, 7^{vi}) of sensors (7) which is placed near a respective element of the first elements (31, 32, 33, 34, 35, 36). In the same way, considering the second elements as well, the regulation phase of the power may be a regulation phase of the power in an independent way for each one of the first elements (31, 32, 33, 34, 35, 36) and of the second elements (39, 49) in which the power of each one of the first elements (31, 32, 33, 34, 35, 36) and of each one of the second elements (39, 49) is regulated following said acquisition phase of measure of thickness (S) of the refractory material in which the acquisition phase of measure of thickness (S) is a multiple acquisition phase of the thickness (S) of the refractory material by means of a series (7ⁱ, 7ⁱⁱ, 7ⁱⁱⁱ, 7^{iv}, 7^{v}, 7^{vi}) of measuring sensors (7) in which each sensor of the series (7ⁱ, 7ⁱⁱ, 7ⁱⁱⁱ, 7^{iv}, 7^{v}, 7^{vi}) of sensors (7) is placed in a respective different measuring zone with respect to the measuring zone of another of the sensors of the series (7ⁱ, 7ⁱⁱ, 7ⁱⁱⁱ, 7^{iv}, 7^{v}, 7^{vi}) of sensors (7), the regulation of the power for each one of the first elements (31, 32, 33, 34, 35, 36) and for each one of the second elements (39, 49) being a regulation phase which occurs depending on said measure of thickness (S) carried out by means of one of said sensors of the series (7ⁱ, 7ⁱⁱ, 7ⁱⁱⁱ, 7^{iv}, 7^{v}, 7^{vi}) of sensors (7) which is placed near a respective element of the first elements (31, 32, 33, 34, 35, 36) or near a respective element of the second elements (39, 49). This solution is particularly advantageous because a first group of the sensors of the series (7ⁱ, 7ⁱⁱ, 7ⁱⁱⁱ, 7^{iv}, 7^{v}, 7^{vi}) may be placed in such a way that each sensor of the first group is placed near a respective element of the first elements (31, 32, 33, 34, 35, 36) for regulation of the power of each one of the first elements (31, 32, 33, 34, 35, 36) depending on the respective measurement of thickness of the corresponding sensor near the respective element of the first elements (31, 32, 33, 34, 35, 36). In the same way, a second group of said sensors of the series (7ⁱ, 7ⁱⁱ, 7ⁱⁱⁱ, 7^{iv}, 7^{v}, 7^{vi}) may be placed in such a way that each sensor of the second group is placed near a respective element of the second elements (39, 49) for regulation of the power of each one of the second elements (39, 49) depending on the respective measurement of thickness of the corresponding sensor near the respective element of the second elements.

The description of the present invention has been made with reference to the enclosed figures in one of its preferred embodiments, but it is evident that a lot of possible changes, modifications and variations will be immediately clear to those skilled in the art in the light of the previous description. Thus, it must be underlined that the invention is not limited to the previous description, but it includes all the changes, modifications and variations in accordance with the appended claims.

### NOMENCLATURE USED

With reference to the identification numbers in the enclosed figures, the following nomenclature has been used:
1. Furnace
2. Stirring device or stirrer
3. Tapping hole
4. Cover
5. Electrode
6. Metallic material in the melted state
7, 7ⁱ, 7ⁱⁱ, 7ⁱⁱⁱ, 7^{iv}, 7^{v}, 7^{vi} Sensor
8. Local unit
9. Control or processing unit
10. Controller
11. First series of parameters or controls
12. Second series of parameters or controls
13. Power supply panel
14. Supply inverter
15. Bottom wall
16. Refractory material
17. First layer
18. Second layer
19. Control system
20. Stirring system
21. First receiving coil
22. Second receiving coil
23. Transmission coil
24. Container
25. Temperature detector
26. Housing
27. Couple of wires
28. Filler material
29. Central axis of the stirring device or stirrer
30. Assembly plane
31. First component
32. Second component
33. Third component
34. Fourth component
35. Fifth component
36. Sixth component
37. Longitudinal axis of the furnace
38. Central axis of the furnace
39. Seventh component
40. Support
41. Perimetric portion
42. Central portion
43. Casing
44. Winding
45. Nucleus
46. Conductor
47. First series
48. Second series
49. Eighth component
50. Transverse axis of the furnace
D. Distance
E. Erosion
S. Thickness

## Claims

1. Control method of electromagnetic stirring device (2) for melting furnace (1) of metallic material in which a melting process occurs, in which the furnace (1) includes a metal bottom wall (15) covered with refractory material (16), the stirring device (2) being placed below the furnace (1) at the bottom wall (15), in which below is referred to with respect to the gravity direction, the stirring device (2) generating an electromagnetic force field which is at least partially situated inside the furnace (1) for electromagnetic stirring action on metallic material in the melted state (6) contained inside the furnace (1), the stirring device (2) comprising a control unit (9) of the stirring device (2), in which the method includes a control phase of a driving power of the stirring device (2), in which the stirring device (2) further includes at least one sensor (7) for measuring the thickness (S) of the refractory material (16) of the furnace (1), the sensor (7) for measuring the thickness (S) being installed in the refractory material (16), the control unit (9) including a controller (10) for reception of measuring of thickness (S) of the refractory material by means of the measuring sensor (7), the controller (10) comprising processing means configured for determining the driving power of the stirring device (2) depending on the measure of thickness (S) of the refractory materials, the method further comprising a regulation phase of the driving power of the stirring device (2) in which the regulation phase of the power includes the following steps:
- acquisition by the control unit (9) of a measure of thickness (S) of the refractory material by means of the measuring sensor (7) during the melting process;
- regulation of the driving power of the stirring device (2) depending on the measure of thickness (S) of the refractory material;
**characterised in that**
the regulation phase of the driving power of the stirring device (2) depending on the measure of thickness (S) of the refractory material is such that a reduction of the measure of thickness (S) corresponds to a reduction of the driving power of the stirring device (2), the control method including an initial calibration phase comprising an acquisition phase of a measure of initial thickness (S) of the refractory material by means of the measuring sensor (7) in condition of absence of erosion of the refractory (16), the regulation phase of the power depending on the measure of thickness (S) of the refractory material including:
- a comparison phase between the measure of thickness (S) of the refractory material during the melting process and the measure of initial thickness (S),
- a calculation phase of the power for maintenance of a target value of stirring speed of the metallic material in the melted state (6) depending on the reduction of the thickness (S) of the refractory material during the melting process,
the regulation phase being a setting phase of a control signal of current of the electromagnetic stirring device (2), in which the current control signal is calculated depending on the difference between the measure of initial thickness (S) and the measure of thickness (S) of the refractory material during the melting process, in such a way that actual stirring speed of the metallic material in the melted state (6) is independent of the erosion condition of the refractory material.

2. Control method of electromagnetic stirring device (2) according to the previous claim **characterised in that**
the acquisition phase of the measure of thickness (S) of the refractory material by means of the measuring sensor (7) occurs by means of a measuring sensor (7) of electromagnetic type which is installed in the refractory material (16), the sensor comprising a transmission coil (23), a first receiving coil (21) and a second receiving coil (22) in which the transmission coil (23) is placed between the first receiving coil (21) and the second receiving coil (22) and the coils (21, 22, 23) are placed according to a reciprocally coaxial configuration in which a winding plane of the coils of each one of the coils is parallel to the corresponding winding plane of the other coils and a winding centre of each one of the coils is coaxial with respect to the winding centre of the other coils, the winding of the first receiving coil (21) and the winding of the second receiving coil (22) being reciprocally connected according to a reciprocal connection configuration which is of anti-phase type, the acquisition phase of the measure comprising generation of a magnetic field by means of the transmission coil (23) and detection of a corresponding reaction field by means of the first receiving coil (21) and the second receiving coil (22) for calculation of the measure of thickness (S) depending on a reciprocal unbalanced condition induced between the first receiving coil (21) and the second receiving coil (22) due to presence of electrically conductive material consisting of the metallic material in the melted state (6) contained in the furnace (1) by the variation of the thickness of the second layer (18) of the refractory material (16), that is of the consumable layer of the refractory material (16), being obtained an approach to the sensor (7) of the interface between refractory material (16) and metallic material in the melted state (6) contained in the furnace (1).

3. Control method of electromagnetic stirring device (2) according to claim 1 **characterised in that**
the acquisition phase of the measure of thickness (S) of the refractory material by means of the measuring sensor (7) occurs by means of a measuring sensor (7) comprising a couple of wires (27) consisting of two metallic electrical conductors separated by an insulating filler material (28), inserted in the refractory material (16) in correspondence with a portion of the refractory material (16) subject to erosion in such a way that the erosion of the refractory material causes the consumption of the couple of wires (27), the acquisition phase of the measure comprising a phase of estimation of the length reduction of the couple of wires (27) by means of a measuring phase of the impedance of the couple of wires (27).

4. Control method of an electromagnetic stirring device (2) according to any of the previous claims in which the stirring device (2) comprises at least one element (31, 32, 33, 34, 35, 36, 39, 49) configured for generating a respective electromagnetic field, in which the electromagnetic stirring device (2) comprises at least one first series (47) of first elements (31, 32, 33, 34, 35, 36) of generation of the force field which are placed according to a shape in which the first elements (31, 32, 33, 34, 35, 36) of the first series (47) are placed one after another on an assembly plane (30), in which the assembly plane (30) is suitable for being parallel to the bottom of the melting furnace (1) when the electromagnetic stirring device (2) is in the installed condition in correspondence with the bottom of the melting furnace (1), the first elements (31, 32, 33, 34, 35, 36) being placed around a central axis of the stirring device (29) which is an orthogonal central axis with respect to the assembly plane (30), in which the electromagnetic stirring device (2) includes one or more further second internal elements (39, 49) of generation of the force field, further with respect to the first elements (31, 32, 33, 34, 35, 36) of the first series (47), in which the one or more second internal elements (39, 49) are internally placed with respect to the ensemble of the first elements (31, 32, 33, 34, 35, 36) of the first series (47), **characterised in that**
the method includes a control phase of the first elements (31, 32, 33, 34, 35, 36) in which the first elements (31, 32, 33, 34, 35, 36) are driven with a three-phase tern of currents according to a configuration in which each one of the first elements (31, 32, 33, 34, 35, 36) is driven with a respective shifted current with respect to another element of the first elements (31, 32, 33, 34, 35,36) which is previous or subsequent with respect to a deposition sequence of the elements on the assembly plane (30) and it further includes a coordinated control phase of the first elements (31, 32, 33, 34, 35, 36) and of the one or more second internal elements (39, 49), in which the one or more second internal elements (39, 49) and the first elements (31, 32, 33, 34, 35, 36) are driven with a three-phase tern of currents according to a configuration in which at least one of the one or more second internal elements (39, 49) is driven with a respective shifted current with respect to corresponding driving currents of one or more elements of the first series (47) of the first elements (31, 32, 33, 34, 35, 36).

5. Control method of electromagnetic stirring device (2) according to claim 4 **characterised in that**
the regulation phase of the power is a regulation phase of the power in an independent way for each one of the first elements (31, 32, 33, 34, 35, 36) in which the power of each one of the first elements (31, 32, 33, 34, 35, 36) is regulated following said acquisition phase of measure of thickness (S) of the refractory material in which the acquisition phase of measure of thickness (S) is a multiple acquisition phase of the thickness (S) of the refractory material by means of a series (7ⁱ, 7ⁱⁱ, 7ⁱⁱⁱ, 7^{iv}, 7^{v}, 7^{vi}) of measuring sensors (7) in which each sensor of the series (7ⁱ, 7ⁱⁱ, 7ⁱⁱⁱ, 7^{iv}, 7^{v}, 7^{vi}) of sensors (7) is placed in a respective different measuring zone with respect to the measuring zone of another of the sensors of the series (7ⁱ, 7ⁱⁱ, 7ⁱⁱⁱ, 7^{iv}, 7^{v}, 7^{vi}) of sensors (7), the regulation of the power for each one of the first elements (31, 32, 33, 34, 35, 36) being a regulation phase which occurs depending on said measure of thickness (S) carried out by means of one of said sensors of the series (7ⁱ, 7ⁱⁱ, 7ⁱⁱⁱ, 7^{iv}, 7^{v}, 7^{vi}) of sensors (7) which is placed near a respective element of the first elements (31, 32, 33, 34, 35, 36).

6. Control method of electromagnetic stirring device (2) according to the previous claim and according to claim 4 **characterised in that**
the regulation phase of the power is a regulation phase of the power in an independent way for each one of the first elements (31, 32, 33, 34, 35, 36) and the second elements (39, 49) in which the power of each one of the first elements (31, 32, 33, 34, 35, 36) and of each one of the second elements (39, 49) is regulated following said acquisition phase of measure of thickness (S) of the refractory material in which the acquisition phase of measure of thickness (S) is a multiple acquisition phase of the thickness (S) of the refractory material by means of the series (7ⁱ, 7ⁱⁱ, 7ⁱⁱⁱ, 7^{iv}, 7^{v}, 7^{vi}) of measuring sensors (7) in which each sensor of the series (7ⁱ, 7ⁱⁱ, 7ⁱⁱⁱ, 7^{iv}, 7^{v}, 7^{vi}) of sensors (7) is placed in a respective different measuring zone with respect to the measuring zone of another of the sensors of the series (7ⁱ, 7ⁱⁱ, 7ⁱⁱⁱ, 7^{iv}, 7^{v}, 7^{vi}) of sensors (7), the regulation of the power for each one of the first elements (31, 32, 33, 34, 35, 36) and for each one of the second elements (39, 49) being a regulation phase which occurs depending on said measure of thickness (S) carried out by means of one of said sensors of the series (7ⁱ, 7ⁱⁱ, 7ⁱⁱⁱ, 7^{iv}, 7^{v}, 7^{vi}) of sensors (7) which is placed near a respective element of the first elements (31, 32, 33, 34, 35, 36) or near a respective element of the second elements (39, 49).

7. Electromagnetic stirring device (2) for melting furnace (1) of metallic material in which a melting process occurs, in which the furnace (1) includes a metal bottom wall (15) covered with refractory material (16), the stirring device (2) configured to be placed below the furnace (1) at the bottom wall (15), in which below is referred to with respect to the gravity direction, the stirring device (2) configured to generate an electromagnetic force field which is at least partially situated inside the furnace (1) for electromagnetic stirring action on metallic material in the melted state (6) contained inside the furnace (1), the stirring device (2) comprising a control unit (9) of the stirring device (2) configured for controlling a driving power of the stirring device (2), **characterised in that**
the stirring device (2) comprises at least one sensor (7) for measuring the thickness (S) of the refractory material (16) of the furnace (1), the sensor (7) for measuring the thickness (S) being suitable for being installed in the refractory material (16), in which the control unit (9) includes a controller (10) for reception of a measure of thickness (S) of the refractory material by means of the measuring sensor (7) during the melting process, the controller (10) comprising processing means configured for determining the driving power of the stirring device (2) depending on the measure of thickness (S) of the refractory material,
and further
the processing means are configured for determining the driving power of the stirring device (2) depending on the measure of thickness (S) of the refractory material in such a way that a reduction of the measure of thickness (S) corresponds to a reduction of the driving power of the stirring device (2).

8. Electromagnetic stirring device (2) for melting furnace (1) according to claim 7, in which the control unit (9) is configured to perform the phases of a control method of electromagnetic stirring device (2) **characterised in that**
the control method of the electromagnetic stirring device is made according to any of the previous claims 1 to 9.

9. Electromagnetic stirring device (2) for melting furnace (1) according to any of the previous claims 7 to 8 **characterised in that**
the sensor (7) for measuring the measure of thickness (S) of the refractory material is an electromagnetic type sensor which is suitable for being installed in the refractory material (16), the sensor comprising a transmission coil (23), a first receiving coil (21) and a second receiving coil (22) in which the transmission coil (23) is placed between the first receiving coil (21) and the second receiving coil (22) and the coils (21, 22, 23) are placed according to a reciprocally coaxial configuration in which a winding plane of the coils of each one of the coils is parallel to the corresponding winding plane of the other coils and a winding centre of each one of the coils is coaxial with respect to the winding centre of the other coils.

10. Electromagnetic stirring device (2) for melting furnace (1) according to the previous claim, **characterised in that**
the winding of the first receiving coil (21) and the winding of the second receiving coil (22) being reciprocally connected according to a reciprocal connection configuration which is of anti-phase type.

11. Electromagnetic stirring device (2) for melting furnace (1) according to any of the previous claims 7 to 8 **characterised in that**
the measuring sensor (7) of the measure of thickness (S) of the refractory material is a sensor of the type comprising a couple of wires (27) consisting of two metallic electrical conductors separated by an insulating filler material (28), suitable for being inserted in the refractory material (16) in correspondence with a portion of the refractory material (16) subject to erosion in such a way that the erosion of the refractory material causes the consumption of the couple of wires (27) for estimation of the length reduction of the couple of wires (27) by means of a measurement of the impedance of the couple of wires (27).

12. Electromagnetic stirring device (2) for melting furnace (1) according to any of the previous claims 7 to 11 **characterised in that**
the stirring device (2) comprises at least one element (31, 32, 33, 34, 35, 36, 39, 49) configured for generation of respective electromagnetic field, in which the electromagnetic stirring device (2) comprises at least one first series (47) of first elements (31, 32, 33, 34, 35, 36) of generation of the force field which are placed according to a shape in which the first elements (31, 32, 33, 34, 35, 36) of the first series (47) are placed one after another on an assembly plane (30), in which the assembly plane (30) is suitable for being parallel to the bottom of the melting furnace (1) when the electromagnetic stirring device (2) is in the installed condition in correspondence with the bottom of the melting furnace (1), the first elements (31, 32, 33, 34, 35, 36) being placed around a central axis of the stirring device (29) which is an orthogonal central axis with respect to the assembly plane (30), the stirring device (2) including one or more further second internal elements (39, 49) of generation of the force field, further with respect to the first elements (31, 32, 33, 34, 35, 36) of the first series (47), in which the one or more second internal elements (39, 49) are internally placed with respect to the ensemble of the first elements (31, 32, 33, 34, 35, 36) of the first series (47).

13. Electromagnetic stirring device (2) for melting furnace (1) according to the previous claim, **characterised in that**
the first elements (31, 32, 33, 34, 35, 36) are placed along a closed path which develops on the assembly plane (30).

14. Electromagnetic stirring device (2) according to any of the previous claims 12 to 13, **characterised in that**
the first elements (31, 32, 33, 34, 35, 36) of the first series (47) are controlled by the control unit (9) independently of one another and configured to apply reciprocally shifted alternating currents for generation of the force field in such a way that the force field induces movements on the metallic material contained inside the melting furnace (1) which are configurable depending on different sequences of application of the reciprocally shifted alternating currents independently applied on the first elements (31, 32, 33, 34, 35, 36) of the first series (47).

15. Electromagnetic stirring device (2) according to any of the previous claims 12 to 14, **characterised in that**
the electromagnetic stirring device (2) includes more than one of said further second internal elements (39, 49) of generation of the force field, in which said further second internal elements (39, 49) form a second series (48) of second internal elements (39, 49) of generation of the force field which are placed according to a shape in which the second internal elements (39, 49) of the second series (48) are placed internally with respect to the ensemble of the first elements (31, 32, 33, 34, 35, 36) of the first series (47).

16. Electromagnetic stirring device (2) according to the previous claim, **characterised in that** the second elements (39, 49) of the second series (48) are controlled by the control unit (9) independently of one another and configured to apply reciprocally shifted alternating currents for generation of the force field in such a way that the force field induces movements on the metallic material contained inside the melting furnace (1) which are configurable depending on different sequences of application of the reciprocally shifted alternating currents independently applied on the second elements (39, 49) of the second series (48).

17. Electromagnetic stirring device (2) according to any of the previous claims 12 to 16, **characterised in that**
the one or more further second internal elements (39, 49) are controlled by the control unit (9) independently with respect to the first elements (31, 32, 33, 34, 35, 36) of the first series (47).

18. Electromagnetic stirring device (2) according to any of the previous claims 12 to 17, **characterised in that**
the one or more further second internal elements (39, 49) are controlled by the control unit (9) in a coordinated way together with the first elements (31, 32, 33, 34, 35, 36) of the first series (47) for application of reciprocally shifted alternating currents for generation of the force field in such a way that the force field induces movements on the metallic material contained inside the melting furnace (1) which are configurable depending on different sequences of application of the reciprocally shifted alternating currents applied in a coordinated way on the one or more further second internal elements (39, 49) of the second series (48) and on the first elements (31, 32, 33, 34, 35, 36) of the first series (47).

19. Electromagnetic stirring device (2) according to any of the previous claims 7 to 18, **characterised in that**
it includes a control system of the current of the elements for generation of the force field in which the control system of the current supplies a current proportional to a control signal which depends on the measurement of the thickness (S) of the refractory material (16) of the furnace (1).

20. Electromagnetic stirring device (2) according to any of the previous claims 7 to 19, **characterised in that**
it includes a series (7ⁱ, 7ⁱⁱ, 7ⁱⁱⁱ, 7^{iv}, 7^{v}, 7^{vi}) of measuring sensors (7), in which each sensor of the series (7ⁱ, 7ⁱⁱ, 7ⁱⁱⁱ, 7^{iv}, 7^{v}, 7^{vi}) of sensors (7) is configured to be placed in a respective different measuring zone with respect to the measuring zone of another of the sensors of the series (7ⁱ, 7ⁱⁱ, 7ⁱⁱⁱ, 7^{iv}, 7^{v}, 7^{vi}) of sensors (7).

21. Electromagnetic stirring device (2) according to the previous claim, **characterised in that** a first group of said sensors of the series (7ⁱ, 7ⁱⁱ, 7ⁱⁱⁱ, 7^{iv}, 7^{v}, 7^{vi}) of sensors (7) is placed in such a way that each sensor of the first group is placed near a respective element of the first elements (31, 32, 33, 34, 35, 36) for regulation of the power of each one of the first elements (31, 32, 33, 34, 35, 36) depending on the respective measurement of thickness of the corresponding sensor near the respective element of the first elements (31, 32, 33, 34, 35, 36).

22. Electromagnetic stirring device (2) according to claim 16 and according to any of the previous claims 20 to 21, **characterised in that**
a second group of said sensors of the series (7ⁱ, 7ⁱⁱ, 7ⁱⁱⁱ, 7^{iv}, 7^{v}, 7^{vi}) of sensors (7) is configured to be placed in such a way that each sensor of the second group is placed near a respective element of the second elements (39, 49) and configured to regulate the power of each one of the second elements (39, 49) depending on the respective measurement of thickness of the corresponding sensor near the respective element of the second elements (39, 49).

23. Melting furnace (1) of metallic material, in which the furnace (1) includes an electromagnetic stirring device (2) placed below with respect to a wall in correspondence with a bottom of the melting furnace (1) in such a way that a force field of the electromagnetic stirring device (2) is at least partially situated inside the melting furnace (1) for electromagnetic stirring action on molten metal contained inside the melting furnace (1), **characterised in that**
the electromagnetic stirring device (2) is made according to any of the previous claims 7 to 22.

## Patentansprüche

1. Steuerungsverfahren einer elektromagnetischen Rührvorrichtung (2) für einen Schmelzofen (1) für metallisches Material, in dem ein Schmelzverfahren stattfindet, wobei der Ofen (1) eine metallische Bodenwand (15) enthält, die mit feuerfestem Material (16) bedeckt ist, wobei die Rührvorrichtung (2) unterhalb des Ofens (1) an der Bodenwand (15) angeordnet ist, wobei sich unterhalb auf die Schwerkraftrichtung bezieht, wobei die Rührvorrichtung (2) ein elektromagnetisches Kraftfeld erzeugt, das sich zumindest teilweise in dem Ofen (1) befindet, um eine elektromagnetische Rührwirkung auf metallisches Material im geschmolzenen Zustand (6) auszuüben, das in dem Ofen (1) enthalten ist, wobei die Rührvorrichtung (2) eine Steuerungseinheit (9) der Rührvorrichtung (2) umfasst, wobei das Verfahren eine Steuerungsphase einer Antriebsleistung der Rührvorrichtung (2) enthält, wobei die Rührvorrichtung (2) ferner mindestens einen Sensor (7) zum Messen der Dicke (S) des feuerfesten Materials (16) des Ofens (1) enthält, wobei der Sensor (7) zum Messen der Dicke (S) in dem feuerfesten Material (16) installiert ist, wobei die Steuerungseinheit (9) eine Steuerung (10) zum Empfang von Messungen der Dicke (S) des feuerfesten Materials mittels des Messsensors (7) enthält, wobei die Steuerung (10) Verarbeitungsmittel umfasst, die zum Bestimmen der Antriebsleistung der Rührvorrichtung (2) in Abhängigkeit von dem Maß der Dicke (S) der feuerfesten Materialien konfiguriert sind, wobei das Verfahren ferner eine Regelungsphase der Antriebsleistung der Rührvorrichtung (2) umfasst, wobei die Regelungsphase der Leistung die folgenden Schritte enthält:
- Erfassung eines Maßes der Dicke (S) des feuerfesten Materials durch die Steuerungseinheit (9) mittels des Messsensors (7) während des Schmelzvorgangs;
- Regelung der Antriebsleistung der Rührvorrichtung (2) in Abhängigkeit von dem Maß der Dicke (S) des feuerfesten Materials;
**gekennzeichnet dadurch, dass**
die Regelungsphase der Antriebsleistung der Rührvorrichtung (2) in Abhängigkeit von dem Maß der Dicke (S) des feuerfesten Materials so ist, dass eine Reduzierung des Maßes der Dicke (S) einer Reduzierung der Antriebsleistung der Rührvorrichtung (2) entspricht, wobei das Steuerungsverfahren eine anfängliche Kalibrierungsphase enthält, die eine Erfassungsphase eines Maßes der anfänglichen Dicke (S) des feuerfesten Materials mittels des Messsensors (7) im Zustand der Abwesenheit einer Erosion des feuerfesten Materials (16) umfasst, wobei die Regelungsphase der Leistung, die von dem Maß der Dicke (S) des feuerfesten Materials abhängt, Folgendes enthält:
- eine Vergleichsphase zwischen dem Maß der Dicke (S) des feuerfesten Materials während des Schmelzverfahrens und dem Maß der anfänglichen Dicke (S),
- eine Berechnungsphase der Leistung zur Aufrechterhaltung eines Zielwerts der Rührgeschwindigkeit des metallischen Materials in dem geschmolzenen Zustand (6) in Abhängigkeit von der Reduzierung der Dicke (S) des feuerfesten Materials während des Schmelzverfahrens,
wobei die Regelungsphase eine Einstellphase eines Stromsteuerungssignals der elektromagnetischen Rührvorrichtung (2) ist, wobei das Stromsteuerungssignal in Abhängigkeit von der Differenz zwischen dem Maß der anfänglichen Dicke (S) und dem Maß der Dicke (S) des feuerfesten Materials während des Schmelzverfahrens so berechnet wird, dass die tatsächliche Rührgeschwindigkeit des metallischen Materials im geschmolzenen Zustand (6) unabhängig von dem Erosionszustand des feuerfesten Materials ist.

2. Steuerungsverfahren einer elektromagnetischen Rührvorrichtung (2) nach dem vorhergehenden Anspruch, **gekennzeichnet dadurch, dass**
die Erfassungsphase des Maßes der Dicke (S) des feuerfesten Materials mittels des Messsensors (7) mittels eines Messsensors (7) des elektromagnetischen Typs erfolgt, der in dem feuerfesten Material (16) installiert ist, wobei der Sensor eine Übertragungsspule (23), eine erste Empfangsspule (21) und eine zweite Empfangsspule (22) umfasst, wobei die Übertragungsspule (23) zwischen der ersten Empfangsspule (21) und der zweiten Empfangsspule (22) angeordnet ist und die Spulen (21, 22, 23) gemäß einer wechselseitig koaxialen Konfiguration angeordnet sind, in der eine Wicklungsebene der Spulen jeder der Spulen parallel zu der entsprechenden Wicklungsebene der anderen Spulen ist und eine Wicklungsmitte jeder der Spulen koaxial in Bezug auf die Wicklungsmitte der anderen Spulen ist, wobei die Wicklung der ersten Empfangsspule (21) und die Wicklung der zweiten Empfangsspule (22) gemäß einer wechselseitigen Verbindungskonfiguration vom gegenphasigen Typ wechselseitig verbunden sind, wobei die Erfassungsphase des Maßes die Erzeugung eines Magnetfelds mittels der Übertragungsspule (23) und die Erfassung eines entsprechenden Reaktionsfelds mittels der ersten Empfangsspule (21) und der zweiten Empfangsspule (22) umfasst, um das Maß der Dicke (S) in Abhängigkeit von einem wechselseitigen Ungleichgewichtszustand zu berechnen, der zwischen der ersten Empfangsspule (21) und der zweiten Empfangsspule (22) aufgrund des Vorhandenseins von elektrisch leitendem Material, das aus dem in dem Ofen (1) enthaltenen metallischen Material im geschmolzenen Zustand (6) besteht, durch die Variation der Dicke der zweiten Schicht (18) des feuerfesten Materials (16), d. h. der verbrauchbaren Schicht des feuerfesten Materials (16), hervorgerufen wird, wobei eine Annäherung an den Sensor (7) der Schnittstelle zwischen dem feuerfesten Material (16) und dem in dem Ofen (1) enthaltenen metallischen Material im geschmolzenen Zustand (6) erreicht wird.

3. Steuerungsverfahren einer elektromagnetischen Rührvorrichtung (2) nach Anspruch 1, **gekennzeichnet dadurch, dass**
die Erfassungsphase des Maßes der Dicke (S) des feuerfesten Materials mittels des Messsensors (7) mittels eines Messsensors (7) erfolgt, der ein paar Drähte (27) umfasst, die aus zwei metallischen elektrischen Leitern bestehen, die durch ein isolierendes Füllmaterial (28) getrennt sind, das in das feuerfeste Material (16) in Übereinstimmung mit einem Teil des feuerfesten Materials (16) eingefügt ist, der einer Erosion so ausgesetzt ist, dass die Erosion des feuerfesten Materials den Verbrauch der paar Drähte (27) verursacht, wobei die Erfassungsphase des Maßes eine Schätzungsphase der Längenreduzierung der paar Drähte (27) mittels einer Messphase der Impedanz der paar Drähte (27) umfasst.

4. Steuerungsverfahren einer elektromagnetischen Rührvorrichtung (2) nach einem der vorhergehenden Ansprüche, wobei die Rührvorrichtung (2) mindestens ein Element (31, 32, 33, 34, 35, 36, 39, 49) umfasst, das zum Erzeugen eines jeweiligen elektromagnetischen Felds konfiguriert ist, wobei die elektromagnetische Rührvorrichtung (2) mindestens eine erste Reihe (47) von ersten Elementen (31, 32, 33, 34, 35, 36) zur Erzeugung des Kraftfelds umfasst, die gemäß einer Form angeordnet sind, in der die ersten Elemente (31, 32, 33, 34, 35, 36) der ersten Reihe (47) nacheinander auf einer Montageebene (30) angeordnet sind, wobei die Montageebene (30) geeignet ist, parallel zu dem Boden des Schmelzofens (1) zu sein, wenn die elektromagnetische Rührvorrichtung (2) in dem installierten Zustand in Übereinstimmung mit dem Boden des Schmelzofens (1) ist, wobei die ersten Elemente (31, 32, 33, 34, 35, 36) um eine Mittelachse der Rührvorrichtung (29) angeordnet sind, die eine orthogonale Mittelachse in Bezug auf die Montageebene (30) ist, wobei die elektromagnetische Rührvorrichtung (2) ein oder mehrere weitere zweite innere Elemente (39, 49) zur Erzeugung des Kraftfelds enthält, ferner in Bezug auf die ersten Elemente (31, 32, 33, 34, 35, 36) der ersten Reihe (47), wobei das eine oder die mehreren zweiten inneren Elemente (39, 49) in Bezug auf die Gesamtheit der ersten Elemente (31, 32, 33, 34, 35, 36) der ersten Reihe (47) innen angeordnet sind, **gekennzeichnet dadurch, dass**
das Verfahren eine Steuerungsphase der ersten Elemente (31, 32, 33, 34, 35, 36) enthält, in der die ersten Elemente (31, 32, 33, 34, 35, 36) mit einer dreiphasigen Reihe von Strömen gemäß einer Konfiguration angetrieben werden, wobei jedes der ersten Elemente (31, 32, 33, 34, 35, 36) mit einem jeweils verschobenen Strom in Bezug auf ein anderes Element der ersten Elemente (31, 32, 33, 34, 35,36) angetrieben wird, das in Bezug auf eine Ablagerungssequenz der Elemente auf der Montageebene (30) vorhergehend oder nachfolgend ist, und es ferner eine koordinierte Steuerungsphase der ersten Elemente (31, 32, 33, 34, 35, 36) und des einen oder der mehreren zweiten inneren Elemente (39, 49) enthält, in der das eine oder die mehreren zweiten inneren Elemente (39, 49) und die ersten Elemente (31, 32, 33, 34, 35, 36) mit einer dreiphasigen Reihe von Strömen gemäß einer Konfiguration angetrieben werden, in der mindestens eines des einen oder der mehreren zweiten inneren Elemente (39, 49) mit einem jeweils verschobenen Strom in Bezug auf entsprechende Antriebsströme eines oder mehrerer Elemente der ersten Reihe (47) der ersten Elemente (31, 32, 33, 34, 35, 36) angetrieben wird.

5. Steuerungsverfahren einer elektromagnetischem Rührvorrichtung (2) nach Anspruch 4, **gekennzeichnet dadurch, dass**
die Regelungsphase der Leistung eine Regelungsphase der Leistung auf unabhängige Weise für jedes der ersten Elemente (31, 32, 33, 34, 35, 36) ist, wobei die Leistung jedes der ersten Elemente (31, 32, 33, 34, 35, 36) im Anschluss an die besagte Erfassungsphase des Maßes der Dicke (S) des feuerfesten Materials geregelt wird, wobei die Erfassungsphase des Maßes der Dicke (S) eine mehrfache Erfassungsphase der Dicke (S) des feuerfesten Materials mittels einer Reihe (7ⁱ, 7ⁱⁱ, 7ⁱⁱⁱ, 7^{iv}, 7^{v}, 7^{vi}) von Messsensoren (7) ist, wobei jeder Sensor der Reihe (7ⁱ, 7ⁱⁱ, 7ⁱⁱⁱ, 7^{iv}, 7^{v}, 7^{vi}) von Sensoren (7) in einer jeweils anderen Messzone in Bezug auf die Messzone eines anderen der Sensoren der Reihe (7ⁱ, 7ⁱⁱ, 7ⁱⁱⁱ, 7^{iv}, 7^{v}, 7^{vi}) von Sensoren (7) angeordnet ist, wobei die Regelung der Leistung für jedes der ersten Elemente (31, 32, 33, 34, 35, 36) eine Regelungsphase ist, die in Abhängigkeit von dem besagten Maß der Dicke (S) auftritt, die mittels eines der besagten Sensoren der Reihe (7ⁱ, 7ⁱⁱ, 7ⁱⁱⁱ, 7^{iv}, 7^{v}, 7^{vi}) von Sensoren (7) ausgeführt wird, der in der Nähe eines jeweiligen Elements der ersten Elemente (31, 32, 33, 34, 35, 36) angeordnet ist.

6. Steuerungsverfahren einer elektromagnetischen Rührvorrichtung (2) nach dem vorhergehenden Anspruch und nach Anspruch 4, **gekennzeichnet dadurch, dass** die Regelungsphase der Leistung eine Regelungsphase der Leistung auf unabhängige Weise für jedes der ersten Elemente (31, 32, 33, 34, 35, 36) und der zweiten Elemente (39, 49) ist, wobei die Leistung jedes der ersten Elemente (31, 32, 33, 34, 35, 36) und jedes der zweiten Elemente (39, 49) im Anschluss an die besagte Erfassungsphase des Maßes der Dicke (S) des feuerfesten Materials geregelt wird, wobei die Erfassungsphase des Maßes der Dicke (S) eine mehrfache Erfassungsphase der Dicke (S) des feuerfesten Materials mittels der Reihe (7ⁱ, 7ⁱⁱ, 7ⁱⁱⁱ, 7^{iv}, 7^{v}, 7^{vi}) von Messsensoren (7) ist, wobei jeder Sensor der Reihe (7ⁱ, 7ⁱⁱ, 7ⁱⁱⁱ, 7^{iv}, 7^{v}, 7^{vi}) von Sensoren (7) in einer jeweils anderen Messzone in Bezug auf die Messzone eines anderen der Sensoren der Reihe (7ⁱ, 7ⁱⁱ, 7ⁱⁱⁱ, 7^{iv}, 7^{v}, 7^{vi}) von Sensoren (7) angeordnet ist, wobei die Regelung der Leistung für jedes der ersten Elemente (31, 32, 33, 34, 35, 36) und für jedes der zweiten Elemente (39, 49) eine Regelungsphase ist, die in Abhängigkeit von dem besagten Maß der Dicke (S) auftritt, die mittels eines der besagten Sensoren der Reihe (7ⁱ, 7ⁱⁱ, 7ⁱⁱⁱ, 7^{iv}, 7^{v}, 7^{vi}) von Sensoren (7) ausgeführt wird, der in der Nähe eines jeweiligen Elements der ersten Elemente (31, 32, 33, 34, 35, 36) oder in der Nähe eines jeweiligen Elements der zweiten Elemente (39, 49) angeordnet ist.

7. Elektromagnetische Rührvorrichtung (2) für einen Schmelzofen (1) für metallisches Material, in dem ein Schmelzverfahren erfolgt, wobei der Ofen (1) eine metallische Bodenwand (15) enthält, die mit feuerfestem Material (16) bedeckt ist, wobei die Rührvorrichtung (2) so konfiguriert ist, dass sie unterhalb des Ofens (1) an der Bodenwand (15) angeordnet ist, wobei sich unterhalb auf die Schwerkraftrichtung bezieht, wobei die Rührvorrichtung (2) so konfiguriert ist, dass sie ein elektromagnetisches Kraftfeld erzeugt, das sich zumindest teilweise in dem Ofen (1) befindet, um eine elektromagnetische Rührwirkung auf metallisches Material im geschmolzenen Zustand (6) auszuüben, das in dem Ofen (1) enthalten ist, wobei die Rührvorrichtung (2) eine Steuerungseinheit (9) der Rührvorrichtung (2) umfasst, die zum Steuern einer Antriebsleistung der Rührvorrichtung (2) konfiguriert ist,
**gekennzeichnet dadurch, dass**
die Rührvorrichtung (2) mindestens einen Sensor (7) zum Messen der Dicke (S) des feuerfesten Materials (16) des Ofens (1) umfasst, wobei der Sensor (7) zum Messen der Dicke (S) geeignet ist, um in das feuerfeste Material (16) installiert zu werden, wobei die Steuerungseinheit (9) eine Steuerung (10) für den Empfang eines Maßes der Dicke (S) des feuerfesten Materials mittels des Messsensors (7) während des Schmelzverfahrens enthält, wobei die Steuerung (10) Verarbeitungsmittel umfasst, die zum Bestimmen der Antriebsleistung der Rührvorrichtung (2) in Abhängigkeit von dem Maß der Dicke (S) des feuerfesten Materials konfiguriert sind,
und wobei ferner
die Verarbeitungsmittel zum Bestimmen der Antriebsleistung der Rührvorrichtung (2) in Abhängigkeit von dem Maß der Dicke (S) des feuerfesten Materials so konfiguriert sind, dass eine Reduzierung des Maßes der Dicke (S) einer Reduzierung der Antriebsleistung der Rührvorrichtung (2) entspricht.

8. Elektromagnetische Rührvorrichtung (2) für einen Schmelzofen (1) nach Anspruch 7, wobei die Steuerungseinheit (9) so konfiguriert ist, dass sie die Phasen eines Steuerungsverfahrens einer elektromagnetischen Rührvorrichtung (2) ausführt, **gekennzeichnet dadurch, dass** das Steuerungsverfahren der elektromagnetischen Rührvorrichtung nach einem der vorhergehenden Ansprüche 1 bis 9 erfolgt.

9. Elektromagnetische Rührvorrichtung (2) für einen Schmelzofen (1) nach einem der vorhergehenden Ansprüche 7 bis 8, **gekennzeichnet dadurch, dass**
der Sensor (7) zum Messen des Maßes der Dicke (S) des feuerfesten Materials ein Sensor des elektromagnetischen Typs ist, der geeignet ist, um in das feuerfeste Material (16) installiert zu werden, wobei der Sensor eine Übertragungsspule (23), eine erste Empfangsspule (21) und eine zweite Empfangsspule (22) umfasst, wobei die Übertragungsspule (23) zwischen der ersten Empfangsspule (21) und der zweiten Empfangsspule (22) angeordnet ist und die Spulen (21, 22, 23) gemäß einer wechselseitig koaxialen Konfiguration angeordnet sind, in der eine Wicklungsebene der Spulen jeder der Spulen parallel zu der entsprechenden Wicklungsebene der anderen Spulen ist und eine Wicklungsmitte jeder der Spulen koaxial in Bezug auf die Wicklungsmitte der anderen Spulen ist.

10. Elektromagnetische Rührvorrichtung (2) für einen Schmelzofen (1) nach dem vorhergehenden Anspruch, **gekennzeichnet dadurch, dass**
die Wicklung der ersten Empfangsspule (21) und die Wicklung der zweiten Empfangsspule (22) gemäß einer wechselseitigen Verbindungskonfiguration vom gegenphasigen Typ wechselseitig verbunden sind.

11. Elektromagnetische Rührvorrichtung (2) für einen Schmelzofen (1) nach einem der vorhergehenden Ansprüche 7 bis 8, **gekennzeichnet dadurch, dass**
der Messsensor (7) des Maßes der Dicke (S) des feuerfesten Materials ein Sensor des Typs ist, der ein paar Drähte (27) umfasst, die aus zwei metallischen elektrischen Leitern bestehen, die durch ein isolierendes Füllmaterial (28) getrennt sind, das geeignet ist, um in das feuerfeste Material (16) in Übereinstimmung mit einem Teil des feuerfesten Materials (16) eingefügt zu werden, der der Erosion so ausgesetzt ist, dass die Erosion des feuerfesten Materials den Verbrauch der paar Drähte (27) verursacht, um die Längenreduzierung der paar Drähte (27) mittels einer Messung der Impedanz der paar Drähte (27) abzuschätzen.

12. Elektromagnetische Rührvorrichtung (2) für einen Schmelzofen (1) nach einem der vorhergehenden Ansprüche 7 bis 11, **gekennzeichnet dadurch, dass**
die Rührvorrichtung (2) mindestens ein Element (31, 32, 33, 34, 35, 36, 39, 49) umfasst, das zur Erzeugung eines jeweiligen elektromagnetischen Felds konfiguriert ist, wobei die elektromagnetische Rührvorrichtung (2) mindestens eine erste Reihe (47) von ersten Elementen (31, 32, 33, 34, 35, 36) zur Erzeugung des Kraftfelds umfasst, die gemäß einer Form angeordnet sind, in der die ersten Elemente (31, 32, 33, 34, 35, 36) der ersten Reihe (47) nacheinander auf einer Montageebene (30) angeordnet sind, wobei die Montageebene (30) geeignet ist, parallel zu dem Boden des Schmelzofens (1) zu sein, wenn die elektromagnetische Rührvorrichtung (2) in dem installierten Zustand in Übereinstimmung mit dem Boden des Schmelzofens (1) ist, wobei die ersten Elemente (31, 32, 33, 34, 35, 36) um eine Mittelachse der Rührvorrichtung (29) angeordnet sind, die eine orthogonale Mittelachse in Bezug auf die Montageebene (30) ist, wobei die Rührvorrichtung (2) ein oder mehrere weitere zweite innere Elemente (39, 49) zur Erzeugung des Kraftfelds enthält, ferner in Bezug auf die ersten Elemente (31, 32, 33, 34, 35, 36) der ersten Reihe (47), wobei das eine oder die mehreren zweiten inneren Elemente (39, 49) in Bezug auf die Gesamtheit der ersten Elemente (31, 32, 33, 34, 35, 36) der ersten Reihe (47) innen angeordnet sind.

13. Elektromagnetische Rührvorrichtung (2) für einen Schmelzofen (1) nach dem vorhergehenden Anspruch, **gekennzeichnet dadurch, dass**
die ersten Elemente (31, 32, 33, 34, 35, 36) entlang einer geschlossenen Bahn angeordnet sind, die sich auf der Montageebene (30) entwickelt.

14. Elektromagnetische Rührvorrichtung (2) nach einem der vorhergehenden Ansprüche 12 bis 13, **gekennzeichnet dadurch, dass**
die ersten Elemente (31, 32, 33, 34, 35, 36) der ersten Reihe (47) von der Steuerungseinheit (9) unabhängig voneinander gesteuert werden und so konfiguriert sind, dass sie wechselseitig verschobene Wechselströme zur Erzeugung des Kraftfelds so anwenden, dass das Kraftfeld Bewegungen an dem in dem Schmelzofen (1) enthaltenen metallischen Material hervorruft, die in Abhängigkeit von verschiedenen Anwendungssequenzen der wechselseitig verschobenen Wechselströme konfigurierbar sind, die unabhängig voneinander an den ersten Elementen (31, 32, 33, 34, 35, 36) der ersten Reihe (47) angewendet werden.

15. Elektromagnetische Rührvorrichtung (2) nach einem der vorhergehenden Ansprüche 12 bis 14, **gekennzeichnet dadurch, dass**
die elektromagnetische Rührvorrichtung (2) mehr als eines der besagten weiteren zweiten inneren Elemente (39, 49) zur Erzeugung des Kraftfelds enthält, wobei die besagten weiteren zweiten inneren Elemente (39, 49) eine zweite Reihe (48) von zweiten inneren Elementen (39, 49) zur Erzeugung des Kraftfelds bilden, die entsprechend einer Form angeordnet sind, in der die zweiten inneren Elemente (39, 49) der zweiten Reihe (48) in Bezug auf die Gesamtheit der ersten Elemente (31, 32, 33, 34, 35, 36) der ersten Reihe (47) innen angeordnet sind.

16. Elektromagnetische Rührvorrichtung (2) nach dem vorhergehenden Anspruch, **gekennzeichnet dadurch, dass**
die zweiten Elemente (39, 49) der zweiten Reihe (48) von der Steuerungseinheit (9) unabhängig voneinander gesteuert werden und so konfiguriert sind, dass sie wechselseitig verschobene Wechselströme zur Erzeugung des Kraftfelds so anwenden, dass das Kraftfeld Bewegungen an dem in dem Schmelzofen (1) enthaltenen metallischen Material hervorruft, die in Abhängigkeit von verschiedenen Anwendungssequenzen der wechselseitig verschobenen Wechselströme konfigurierbar sind, die unabhängig voneinander an den zweiten Elementen (39, 49) der zweiten Reihe (48) angewendet werden.

17. Elektromagnetische Rührvorrichtung (2) nach einem der vorhergehenden Ansprüche 12 bis 16, **gekennzeichnet dadurch, dass**
das eine oder die mehreren weiteren zweiten inneren Elemente (39, 49) von der Steuerungseinheit (9) unabhängig in Bezug auf die ersten Elemente (31, 32, 33, 34, 35, 36) der ersten Reihe (47) gesteuert werden.

18. Elektromagnetische Rührvorrichtung (2) nach einem der vorhergehenden Ansprüche 12 bis 17, **gekennzeichnet dadurch, dass**
das eine oder die mehreren weiteren zweiten inneren Elemente (39, 49) von der Steuerungseinheit (9) auf koordinierte Weise zusammen mit den ersten Elementen (31, 32, 33, 34, 35, 36) der ersten Reihe (47) zur Anwendung wechselseitig verschobener Wechselströme zur Erzeugung des Kraftfelds so gesteuert werden, dass das Kraftfeld Bewegungen an dem in dem Schmelzofen (1) enthaltenen metallischen Material hervorruft, die in Abhängigkeit von verschiedenen Anwendungssequenzen der wechselseitig verschobenen Wechselströme konfigurierbar sind, die auf koordinierte Weise an dem einen oder den mehreren weiteren zweiten inneren Elementen (39, 49) der zweiten Reihe (48) und an den ersten Elementen (31, 32, 33, 34, 35, 36) der ersten Reihe (47) angewendet werden.

19. Elektromagnetische Rührvorrichtung (2) nach einem der vorhergehenden Ansprüche 7 bis 18, **gekennzeichnet dadurch, dass**
sie ein Steuerungssystem für den Strom der Elemente zur Erzeugung des Kraftfelds enthält, wobei das Steuerungssystem für den Strom einen Strom liefert, der proportional zu einem Steuerungssignal ist, das von der Messung der Dicke (S) des feuerfesten Materials (16) des Ofens (1) abhängt.

20. Elektromagnetische Rührvorrichtung (2) nach einem der vorhergehenden Ansprüche 7 bis 19, **gekennzeichnet dadurch, dass**
sie eine Reihe (7ⁱ, 7ⁱⁱ, 7ⁱⁱⁱ, 7^{iv}, 7^{v}, 7^{vi}) von Messsensoren (7) enthält, wobei jeder Sensor der Reihe (7ⁱ, 7ⁱⁱ, 7ⁱⁱⁱ, 7^{iv}, 7^{v}, 7^{vi}) von Sensoren (7) so konfiguriert ist, dass er in einer jeweils anderen Messzone in Bezug auf die Messzone eines anderen der Sensoren der Reihe (7ⁱ, 7ⁱⁱ, 7ⁱⁱⁱ, 7^{iv}, 7^{v}, 7^{vi}) von Sensoren (7) angeordnet werden kann.

21. Elektromagnetische Rührvorrichtung (2) nach dem vorhergehenden Anspruch, **gekennzeichnet dadurch, dass**
eine erste Gruppe der besagten Sensoren der Reihe (7ⁱ, 7ⁱⁱ, 7ⁱⁱⁱ, 7^{iv}, 7ⁱⁱ, 7^{vi}) von Sensoren (7) so angeordnet ist, dass jeder Sensor der ersten Gruppe in der Nähe eines jeweiligen Elements der ersten Elemente (31, 32, 33, 34, 35, 36) angeordnet ist, um die Leistung jedes der ersten Elemente (31, 32, 33, 34, 35, 36) in Abhängigkeit von der jeweiligen Messung der Dicke des entsprechenden Sensors in der Nähe des jeweiligen Elements der ersten Elemente (31, 32, 33, 34, 35, 36) zu regeln.

22. Elektromagnetische Rührvorrichtung (2) nach Anspruch 16 und nach einem der vorhergehenden Ansprüche 20 bis 21, **gekennzeichnet dadurch, dass** eine zweite Gruppe der besagten Sensoren der Reihe (7ⁱ, 7ⁱⁱ, 7ⁱⁱⁱ, 7^{iv}, 7^{v}, 7^{vi}) von Sensoren (7) so konfiguriert ist, dass sie so angeordnet ist, dass jeder Sensor der zweiten Gruppe in der Nähe eines jeweiligen Elements der zweiten Elemente (39, 49) angeordnet ist, und so konfiguriert ist, dass sie die Leistung jedes der zweiten Elemente (39, 49) in Abhängigkeit von der jeweiligen Messung der Dicke des entsprechenden Sensors in der Nähe des jeweiligen Elements der zweiten Elemente (39, 49) regelt.

23. Schmelzofen (1) für metallisches Material, wobei der Ofen (1) eine elektromagnetische Rührvorrichtung (2) enthält, die unterhalb einer Wand in Übereinstimmung mit einem Boden des Schmelzofens (1) so angeordnet ist, dass sich ein Kraftfeld der elektromagnetischen Rührvorrichtung (2) zumindest teilweise in dem Schmelzofen (1) befindet, um eine elektromagnetische Rührwirkung auf geschmolzenes Metall auszuüben, das in dem Schmelzofen (1) enthalten ist, **gekennzeichnet dadurch, dass**
die elektromagnetische Rührvorrichtung (2) nach einem der vorhergehenden Ansprüche 7 bis 22 hergestellt ist.

## Revendications

1. Méthode de contrôle de dispositif d'agitation (2) électromagnétique pour four (1) de fusion de matériau métallique dans lequel se produit un processus de fusion, où le four (1) inclut une paroi de fond (15) métallique recouverte de matériau réfractaire (16), le dispositif d'agitation (2) étant placé au-dessous du four (1) au niveau de la paroi inférieure (15), où au-dessous est désigné par rapport à la direction de gravité, le dispositif d'agitation (2) générant un champ de force électromagnétique qui est au moins partiellement situé à l'intérieur du four (1) pour action d'agitation électromagnétique sur matériau métallique à l'état fondu (6) contenu à l'intérieur du four (1), le dispositif d'agitation (2) comprenant une unité de contrôle (9) du dispositif d'agitation (2), où la méthode inclut une phase de contrôle d'une puissance d'entraînement du dispositif d'agitation (2), où le dispositif d'agitation (2) inclut en outre au moins un capteur (7) pour mesurer l'épaisseur (S) du matériau réfractaire (16) du four (1), le capteur (7) pour mesurer l'épaisseur (S) étant installé dans le matériau réfractaire (16), l'unité de contrôle (9) incluant un contrôleur (10) pour la réception de mesure d'épaisseur (S) du matériau réfractaire au moyen du capteur de mesure (7), le contrôleur (10) comprenant des moyens de traitement configurés pour déterminer la puissance d'entraînement du dispositif d'agitation (2) en fonction de la mesure d'épaisseur (S) des matériaux réfractaires, la méthode comprenant en outre une phase de régulation de la puissance d'entraînement du dispositif d'agitation (2) où la phase de régulation de la puissance inclut les étapes suivantes:
- acquisition par l'unité de contrôle (9) d'une mesure d'épaisseur (S) du matériau réfractaire au moyen du capteur de mesure (7) pendant le processus de fusion;
- régulation de la puissance d'entraînement du dispositif d'agitation (2) en fonction de la mesure d'épaisseur (S) du matériau réfractaire ; **caractérisée en ce que**
la phase de régulation de la puissance d'entraînement du dispositif d'agitation (2) en fonction de la mesure d'épaisseur (S) du matériau réfractaire est telle qu'une réduction de la mesure d'épaisseur (S) correspond à une réduction de la puissance d'entraînement du dispositif d'agitation (2), la méthode de contrôle incluant une phase d'étalonnage initiale comprenant une phase d'acquisition d'une mesure d'épaisseur initiale (S) du matériau réfractaire au moyen du capteur de mesure (7) en condition d'absence d'érosion du réfractaire (16), la phase de régulation de la puissance dépendant de la mesure d'épaisseur (S) du matériau réfractaire incluant:
- une phase de comparaison entre la mesure d'épaisseur (S) du matériau réfractaire pendant le processus de fusion et la mesure d'épaisseur initiale (S),
- une phase de calcul de la puissance pour maintien d'une valeur cible de vitesse d'agitation du matériau métallique à l'état fondu (6) en fonction de la réduction de l'épaisseur (S) du matériau réfractaire pendant le processus de fusion,
la phase de régulation étant une phase de réglage d'un signal de contrôle de courant du dispositif d'agitation (2) électromagnétique, où le signal de contrôle de courant est calculé en fonction de la différence entre la mesure d'épaisseur initiale (S) et la mesure d'épaisseur (S) du matériau réfractaire pendant le processus de fusion, de telle sorte que la vitesse d'agitation réelle du matériau métallique à l'état fondu (6) soit indépendante de la condition d'érosion du matériau réfractaire.

2. Méthode de contrôle de dispositif d'agitation (2) électromagnétique selon la revendication précédente **caractérisée en ce que**
la phase d'acquisition de la mesure d'épaisseur (S) du matériau réfractaire au moyen du capteur de mesure (7) a lieu au moyen d'un capteur de mesure (7) de type électromagnétique qui est installé dans le matériau réfractaire (16), le capteur comprenant une bobine de transmission (23), une première bobine de réception (21) et une deuxième bobine de réception (22) où la bobine de transmission (23) est placée entre la première bobine de réception (21) et la deuxième bobine de réception (22) et les bobines (21, 22, 23) sont placées selon une configuration réciproquement coaxiale dans laquelle un plan d'enroulement des bobines de chacune des bobines est parallèle au plan d'enroulement correspondant des autres bobines et un centre d'enroulement de chacune des bobines est coaxial par rapport au centre d'enroulement des autres bobines, l'enroulement de la première bobine de réception (21) et l'enroulement de la deuxième bobine de réception (22) étant réciproquement connectés selon une configuration de connexion réciproque qui est de type antiphase, la phase d'acquisition de la mesure comprenant la génération d'un champ magnétique au moyen de la bobine de transmission (23) et la détection d'un champ de réaction correspondant au moyen de la première bobine de réception (21) et de la deuxième bobine de réception (22) pour calcul de la mesure d'épaisseur (S) en fonction d'une condition de déséquilibre réciproque induit entre la première bobine de réception (21) et la deuxième bobine de réception (22) due à la présence de matériau électriquement conducteur constitué du matériau métallique à l'état fondu (6) contenu dans le four (1) par la variation de l'épaisseur de la deuxième couche (18) du matériau réfractaire (16), c'est-à-dire de la couche consommable du matériau réfractaire (16), en obtenant une approche du capteur (7) de l'interface entre matériau réfractaire (16) et matériau métallique à l'état fondu (6) contenu dans le four (1).

3. Méthode de contrôle de dispositif d'agitation (2) électromagnétique selon la revendication 1 **caractérisée en ce que**
la phase d'acquisition de la mesure d'épaisseur (S) du matériau réfractaire au moyen du capteur de mesure (7) a lieu au moyen d'un capteur de mesure (7) comprenant un couple de fils (27) constitués de deux conducteurs électriques métalliques séparés par un matériau de remplissage isolant (28), inséré dans le matériau réfractaire (16) en correspondance avec une portion du matériau réfractaire (16) soumise à érosion de telle sorte que l'érosion du matériau réfractaire provoque la consommation du couple de fils (27), la phase d'acquisition de la mesure comprenant une phase d'estimation de la réduction de longueur du couple de fils (27) au moyen d'une phase de mesure de l'impédance du couple de fils (27).

4. Méthode de contrôle d'un dispositif d'agitation (2) électromagnétique selon l'une quelconque des revendications précédentes où le dispositif d'agitation (2) comprend au moins un élément (31, 32, 33, 34, 35, 36, 39, 49) configuré pour générer un champ électromagnétique respectif, où le dispositif d'agitation (2) électromagnétique comprend au moins une première série (47) de premiers éléments (31, 32, 33, 34, 35, 36) de génération du champ de force qui sont placés selon une forme dans laquelle les premiers éléments (31, 32, 33, 34, 35, 36) de la première série (47) sont placés l'un après l'autre sur un plan d'assemblage (30), où le plan d'assemblage (30) est apte à être parallèle au fond du four de fusion (1) lorsque le dispositif d'agitation (2) électromagnétique est dans la condition installée en correspondance avec le fond du four de fusion (1), les premiers éléments (31, 32, 33 , 34, 35, 36) étant placés autour d'un axe central du dispositif d'agitation (29) qui est un axe central orthogonal par rapport au plan d'assemblage (30), où le dispositif d'agitation (2) électromagnétique inclut un ou plusieurs deuxièmes éléments internes additionnels (39, 49) de génération du champ de force, additionnels par rapport aux premiers éléments (31, 32, 33, 34, 35, 36) de la première série (47), où l'un ou plusieurs deuxièmes éléments internes (39, 49) sont placés intérieurement par rapport à l'ensemble des premiers éléments (31, 32, 33, 34, 35, 36) de la première série (47), **caractérisée en ce que**
la méthode inclut une phase de contrôle des premiers éléments (31, 32, 33, 34, 35, 36) où les premiers éléments (31, 32, 33, 34, 35, 36) sont entraînés avec un terne triphasé de courants selon une configuration dans laquelle chacun des premiers éléments (31, 32, 33, 34, 35, 36) est entraîné avec un courant décalé respectif par rapport à un autre élément des premiers éléments (31, 32, 33, 34 , 35, 36) qui est précédent ou suivant par rapport à une séquence de dépôt des éléments sur le plan d'assemblage (30) et elle inclut en outre une phase de contrôle coordonné des premiers éléments (31, 32, 33, 34, 35, 36 ) et de l'un ou plusieurs deuxièmes éléments internes (39, 49), où l'un ou plusieurs deuxièmes éléments internes (39, 49) et les premiers éléments (31, 32, 33, 34, 35, 36) sont entraînés avec un terne triphasé de courants selon une configuration dans laquelle au moins l'un de l'un ou plusieurs deuxièmes éléments internes (39, 49) est entraîné avec un courant décalé respectif par rapport à des courants d'entraînement correspondants d'un ou plusieurs éléments de la première série (47) des premiers éléments (31, 32, 33, 34, 35, 36).

5. Méthode de contrôle de dispositif d'agitation (2) électromagnétique selon la revendication 4 **caractérisée en ce que**
la phase de régulation de la puissance est une phase de régulation de la puissance de manière indépendante pour chacun des premiers éléments (31, 32, 33, 34, 35, 36) où la puissance de chacun des premiers éléments (31, 32, 33, 34, 35, 36) est régulée à la suite de ladite phase d'acquisition de mesure d'épaisseur (S) du matériau réfractaire où la phase d'acquisition de mesure d'épaisseur (S) est une phase d'acquisition multiple de l'épaisseur (S) du matériau réfractaire au moyen d'une série (7ⁱ, 7ⁱⁱ, 7ⁱⁱⁱ, 7^{iv}, 7^{v}, 7^{vi}) de capteurs de mesure (7) où chaque capteur de la série (7ⁱ, 7ⁱⁱ, 7ⁱⁱⁱ, 7^{iv}, 7^{v}, 7^{vi}) de capteurs (7) est placé dans une zone de mesure respectivement différente par rapport à la zone de mesure d'un autre des capteurs de la série (7ⁱ, 7ⁱⁱ, 7ⁱⁱⁱ, 7^{iv}, 7^{v}, 7^{vi}) de capteurs (7), la régulation de la puissance pour chacun des premiers éléments (31, 32, 33, 34, 35, 36) étant une phase de régulation qui a lieu en fonction de ladite mesure d'épaisseur (S) effectuée au moyen d'un desdits capteurs de la série (7ⁱ, 7ⁱⁱ, 7ⁱⁱⁱ, 7^{iv}, 7^{v}, 7^{vi}) de capteurs (7) qui est placé à proximité d'un élément respectif des premiers éléments (31, 32, 33, 34, 35, 36).

6. Méthode de contrôle de dispositif d'agitation (2) électromagnétique selon la revendication précédente et selon la revendication 4 **caractérisée en ce que**
la phase de régulation de la puissance est une phase de régulation de la puissance de manière indépendante pour chacun des premiers éléments (31, 32, 33, 34, 35, 36) et des deuxièmes éléments (39, 49) où la puissance de chacun des premiers éléments (31, 32, 33, 34, 35, 36) et de chacun des deuxièmes éléments (39, 49) est régulée à la suite de ladite phase d'acquisition de mesure d'épaisseur (S) du matériau réfractaire où la phase d'acquisition de mesure d'épaisseur (S) est une phase d'acquisition multiple de l'épaisseur (S) du matériau réfractaire au moyen de la série (7ⁱ, 7ⁱⁱ, 7ⁱⁱⁱ, 7^{iv}, 7^{v}, 7^{vi}) de capteurs de mesure (7) où chaque capteur de la série (7ⁱ, 7ⁱⁱ, 7ⁱⁱⁱ, 7^{iv}, 7^{v}, 7^{vi}) de capteurs (7) est placé dans une zone de mesure respective différente par rapport à la zone de mesure d'un autre des capteurs de la série (7ⁱ, 7ⁱⁱ, 7ⁱⁱⁱ, 7^{iv}, 7^{v}, 7^{vi}) de capteurs (7), la régulation de la puissance pour chacun des premiers éléments (31, 32, 33, 34, 35, 36) et pour chacun des deuxièmes éléments (39, 49) étant une phase de régulation qui a lieu en fonction de ladite mesure d'épaisseur (S) effectuée au moyen d'un desdits capteurs de la série (7ⁱ, 7ⁱⁱ, 7ⁱⁱⁱ, 7^{iv}, 7^{v}, 7^{vi}) de capteurs (7) qui est placé à proximité d'un élément respectif des premiers éléments (31, 32, 33, 34, 35, 36) ou à proximité d'un élément respectif des deuxièmes éléments (39, 49).

7. Dispositif d'agitation (2) électromagnétique pour four de fusion (1) de matériau métallique dans lequel se produit un processus de fusion, où le four (1) inclut une paroi inférieure métallique (15) recouverte d'un matériau réfractaire (16), le dispositif d'agitation (2) configuré pour être placé au-dessous du four (1) au niveau de la paroi inférieure (15), où au-dessous est désigné par rapport à la direction de gravité, le dispositif d'agitation (2) configuré pour générer un champ de force électromagnétique qui est au moins partiellement situé à l'intérieur du four (1) pour action d'agitation électromagnétique sur matériau métallique à l'état fondu (6) contenu à l'intérieur du four (1), le dispositif d'agitation (2) comprenant une unité de contrôle (9) du dispositif d'agitation (2) configurée pour contrôler une puissance d'entraînement du dispositif d'agitation (2), **caractérisé en ce que**
le dispositif d'agitation (2) comprend au moins un capteur (7) pour mesurer l'épaisseur (S) du matériau réfractaire (16) du four (1), le capteur (7) pour mesurer l'épaisseur (S) étant apte à étant installé dans le matériau réfractaire (16), où l'unité de contrôle (9) inclut un contrôleur (10) pour la réception d'une mesure d'épaisseur (S) du matériau réfractaire au moyen du capteur de mesure (7) pendant le processus de fusion, le contrôleur (10) comprenant des moyens de traitement configurés pour déterminer la puissance d'entraînement du dispositif d'agitation (2) en fonction de la mesure d'épaisseur (S) du matériau réfractaire, et en outre les moyens de traitement sont configurés pour déterminer la puissance d'entraînement du dispositif d'agitation (2) en fonction de la mesure d'épaisseur (S) du matériau réfractaire de telle sorte qu'une réduction de la mesure d'épaisseur (S) corresponde à une réduction de la puissance d'entraînement du dispositif d'agitation (2).

8. Dispositif d'agitation (2) électromagnétique pour four de fusion (1) selon la revendication 7, où l'unité de contrôle (9) est configurée pour réaliser les phases d'une méthode de contrôle du dispositif d'agitation (2) électromagnétique **caractérisé en ce que**
la méthode de contrôle du dispositif d'agitation électromagnétique est réalisée selon l'une quelconque des revendications précédentes 1 à 9.

9. Dispositif d'agitation (2) électromagnétique pour four de fusion (1) selon l'une quelconque des revendications précédentes 7 à 8 **caractérisé en ce que**
le capteur (7) pour mesurer la mesure d'épaisseur (S) du matériau réfractaire est un capteur de type électromagnétique qui est apte à être installé dans le matériau réfractaire (16), le capteur comprenant une bobine de transmission (23), une première bobine de réception (21) et une deuxième bobine de réception (22) où la bobine de transmission (23) est placée entre la première bobine de réception (21) et la deuxième bobine de réception (22) et les bobines (21, 22, 23) sont placées selon une configuration réciproquement coaxiale dans laquelle un plan d'enroulement des bobines de chacune des bobines est parallèle au plan d'enroulement correspondant des autres bobines et un centre d'enroulement de chacune des bobines est coaxial par rapport au centre d'enroulement des autres bobines.

10. Dispositif d'agitation (2) électromagnétique pour four de fusion (1) selon la revendication précédente, **caractérisé en ce que**
l'enroulement de la première bobine de réception (21) et l'enroulement de la deuxième bobine de réception (22) étant réciproquement connectés selon une configuration de connexion réciproque qui est de type antiphase.

11. Dispositif d'agitation (2) électromagnétique pour four de fusion (1) selon l'une quelconque des revendications précédentes 7 à 8 **caractérisé en ce que**
le capteur de mesure (7) de la mesure d'épaisseur (S) du matériau réfractaire est un capteur du type comprenant un couple de fils (27) consistant en deux conducteurs électriques métalliques séparés par un matériau de remplissage isolant (28), apte à être inséré dans le matériau réfractaire (16) en correspondance avec une portion du matériau réfractaire (16) soumise à érosion de telle sorte que l'érosion du matériau réfractaire provoque la consommation du couple de fils (27) pour estimation de la réduction de longueur du couple de fils (27) au moyen d'une mesure de l'impédance du couple de fils (27).

12. Dispositif d'agitation (2) électromagnétique pour four de fusion (1) selon l'une quelconque des revendications précédentes 7 à 11 **caractérisé en ce que**
le dispositif d'agitation (2) comprend au moins un élément (31, 32, 33, 34, 35, 36, 39, 49) configuré pour la génération de champ électromagnétique respectif, où le dispositif d'agitation (2) électromagnétique comprend au moins une première série (47) de premiers éléments (31, 32, 33, 34, 35, 36) de génération du champ de force qui sont placés selon une forme dans laquelle les premiers éléments (31, 32, 33, 34, 35, 36) de la première série (47) sont placés les uns après les autres sur un plan d'assemblage (30), où le plan d'assemblage (30) est apte à être parallèle au fond du four de fusion (1) lorsque le dispositif d'agitation (2) électromagnétique est dans la condition installée en correspondance avec le fond du four de fusion (1), les premiers éléments (31, 32, 33 , 34, 35, 36) étant placés autour d'un axe central du dispositif d'agitation (29) qui est un axe central orthogonal par rapport au plan d'assemblage (30), le dispositif d'agitation (2) incluant un ou plusieurs deuxièmes éléments internes additionnels (39, 49) de génération du champ de force, additionnels par rapport aux premiers éléments (31, 32, 33, 34, 35, 36) de la première série (47), où l'un ou plusieurs deuxièmes éléments internes ( 39, 49) sont placés intérieurement par rapport à l'ensemble des premiers éléments (31, 32, 33, 34, 35, 36) de la première série (47).

13. Dispositif d'agitation (2) électromagnétique pour four de fusion (1) selon la revendication précédente, **caractérisé en ce que**
les premiers éléments (31, 32, 33, 34, 35, 36) sont placés le long d'un chemin fermé qui se développe sur le plan d'assemblage (30).

14. Dispositif d'agitation (2) électromagnétique selon l'une quelconque des revendications précédentes 12 à 13, **caractérisé en ce que**
les premiers éléments (31, 32, 33, 34, 35, 36) de la première série (47) sont contrôlés par l'unité de contrôle (9) indépendamment les uns des autres et configurés pour appliquer des courants alternatifs décalés réciproquement pour génération du champ de force de telle sorte que le champ de force induise des mouvements sur le matériau métallique contenu à l'intérieur du four de fusion (1) qui sont configurables en fonction de différentes séquences d'application des courants alternatifs décalés réciproquement indépendamment appliqués sur les premiers éléments (31, 32, 33, 34, 35, 36) de la première série (47).

15. Dispositif d'agitation (2) électromagnétique selon l'une quelconque des revendications précédentes 12 à 14, **caractérisé en ce que**
le dispositif d'agitation (2) électromagnétique inclut plus d'un desdits deuxièmes éléments internes additionnels (39, 49) de génération du champ de force, où lesdits deuxièmes éléments internes additionnels (39, 49) forment une deuxième série (48) de deuxièmes éléments internes (39, 49) de génération du champ de force qui sont placés selon une forme dans laquelle les deuxièmes éléments internes (39, 49) de la deuxième série (48) sont placés intérieurement par rapport à l'ensemble des premiers éléments (31, 32, 33, 34, 35, 36) de la première série (47).

16. Dispositif d'agitation (2) électromagnétique selon la revendication précédente, **caractérisé en ce que**
les deuxièmes éléments (39, 49) de la deuxième série (48) sont contrôlés par l'unité de contrôle (9) indépendamment les uns des autres et configurés pour appliquer des courants alternatifs décalés réciproquement pour génération du champ de force de telle sorte que le champ de force induise des mouvements sur le matériau métallique contenu à l'intérieur du four de fusion (1) qui sont configurables en fonction de différentes séquences d'application des courants alternatifs décalés réciproquement indépendamment appliqués sur les deuxièmes éléments (39, 49) de la deuxième série (48).

17. Dispositif d'agitation (2) électromagnétique selon l'une quelconque des revendications précédentes 12 à 16, **caractérisé en ce que**
l'un ou plusieurs deuxièmes éléments internes additionnels (39, 49) sont contrôlés par l'unité de contrôle (9) indépendamment par rapport aux premiers éléments (31, 32, 33, 34, 35, 36) de la première série (47).

18. Dispositif d'agitation (2) électromagnétique selon l'une quelconque des revendications précédentes 12 à 17, **caractérisé en ce que**
l'un ou plusieurs deuxièmes éléments internes additionnels (39, 49) sont contrôlés par l'unité de contrôle (9) de manière coordonnée avec les premiers éléments (31, 32, 33, 34, 35, 36) de la première série (47) pour application de courants alternatifs décalés réciproquement pour génération du champ de force de telle sorte que le champ de force induise des mouvements sur le matériau métallique contenu à l'intérieur du four de fusion (1) qui sont configurables en fonction de différentes séquences d'application des courants alternatifs décalés réciproquement appliqués de manière coordonnée sur l'un ou plusieurs deuxièmes éléments internes additionnels (39, 49) de la deuxième série (48) et sur les premiers éléments (31, 32, 33, 34, 35, 36) de la première série ( 47).

19. Dispositif d'agitation (2) électromagnétique selon l'une quelconque des revendications précédentes 7 à 18, **caractérisé en ce que**
il inclut un système de contrôle du courant des éléments pour génération du champ de force où le système de contrôle du courant fournit un courant proportionnel à un signal de contrôle qui dépend de la mesure de l'épaisseur (S) du matériau réfractaire (16) du four (1).

20. Dispositif d'agitation (2) électromagnétique selon l'une quelconque des revendications précédentes 7 à 19, **caractérisé en ce que**
il inclut une série (7ⁱ, 7ⁱⁱ, 7ⁱⁱⁱ, 7^{iv}, 7^{v}, 7^{vi}) de capteurs de mesure (7), où chaque capteur de la série (7ⁱ, 7ⁱⁱ, 7ⁱⁱⁱ, 7^{iv}, 7^{v}, 7^{vi}) de capteurs (7) est configuré pour être placé dans une zone respective de mesure différente par rapport à la zone de mesure d'un autre des capteurs de la série (7ⁱ, 7ⁱⁱ, 7ⁱⁱⁱ, 7^{iv}, 7^{v}, 7^{vi}) de capteurs (7).

21. Dispositif d'agitation (2) électromagnétique selon la revendication précédente, **caractérisé en ce que**
un premier groupe desdits capteurs de la série (7ⁱ, 7ⁱⁱ, 7ⁱⁱⁱ, 7^{iv}, 7^{v}, 7^{vi}) de capteurs (7) est placé de telle sorte que chaque capteur du premier groupe est placé à proximité d'un élément respectif des premiers éléments (31, 32, 33, 34, 35, 36) de régulation de la puissance de chacun des premiers éléments (31, 32, 33, 34, 35, 36) en fonction de la mesure respective d'épaisseur du capteur correspondant à proximité de l'élément respectif des premiers éléments (31, 32, 33, 34, 35, 36).

22. Dispositif d'agitation (2) électromagnétique selon la revendication 16 et selon l'une quelconque des revendications précédentes 20 à 21, **caractérisé en ce que** un deuxième groupe desdits capteurs de la série (7ⁱ, 7ⁱⁱ, 7ⁱⁱⁱ, 7^{iv}, 7^{v}, 7^{vi}) de capteurs (7) est configuré pour être placé de telle sorte que chaque capteur du deuxième groupe soit placé à proximité d'un élément respectif des deuxièmes éléments (39, 49) et configuré pour réguler la puissance de chacun des deuxièmes éléments (39, 49) en fonction de la mesure respective d'épaisseur du capteur correspondant à proximité de l'élément respectif des deuxièmes éléments (39, 49).

23. Four de fusion (1) de matériau métallique, où le four (1) inclut un dispositif d'agitation (2) électromagnétique placé au-dessous par rapport à une paroi en correspondance avec un fond du four de fusion (1) de telle sorte qu'un champ de force du dispositif d'agitation (2) électromagnétique est situé au moins partiellement à l'intérieur du four de fusion (1) pour action d'agitation électromagnétique sur métal en fusion contenu à l'intérieur du four de fusion (1), **caractérisé en ce que**
le dispositif d'agitation (2) électromagnétique est réalisé selon l'une quelconque des revendications précédentes 7 à 22.
